# EUROPEAN PATENT APPLICATION

(11) **EP 4 632 245 A1**
(43) Date of publication of application: **15.10.2025**
(21) Application number: 23900288.4
(22) Date of filing: 25.09.2023
(51) Int. Cl.: F16D 3/68, B62D 5/04, F16H 1/16

(54) **TORQUE TRANSMISSION JOINT, METHOD FOR ASSEMBLING SAME, AND ELECTRIC MOTOR WITH WORM REDUCTION GEAR**

(30) Priority: 07.12.2022 JP 2022195590
(71) Applicant: NSK Steering & Control, Inc., Tokyo, 141-0032 (JP)
(72) Inventor: ISHIKURI, Satoshi, Maebashi-shi, Gunma 371-8527 (JP); OSAWA, Ryo, Maebashi-shi, Gunma 371-8527 (JP); ISHII, Toru, Maebashi-shi, Gunma 371-8527 (JP); SEGAWA, Toru, Maebashi-shi, Gunma 371-8527 (JP)
(74) Representative: Müller-Boré & Partner Patentanwälte PartG mbB
(86) International application number: PCT/JP2023/034752
(87) International publication number: WO 2024/122164

(57) **Abstract**

A torque transmission joint which can smoothly transmit torque between a pair of rotating members even if central axes of the pair of rotating members do not coincide with each other, and can prevent generation of noise between the pair of rotating members.

A torque transmission joint 1 includes a first rotating member 2, a second rotating member 3, a coupling 4, a first elastic body 5, and a second elastic body 6. The coupling 4 has first nail portions 26 provided on at least one of an outer side or an inner side in the radial direction of end portions on a first side in an axial direction of first support portions 19, and second nail portions 29 provided on at least one of an outer side or an inner side in the radial direction of end portions on a second side in the axial direction of the second support portions 20. The first nail portions 26 engage with the first supported portions 36 of the first elastic body 5 from the first side in the axial direction, and the second nail portions 29 engage with second supported portions 43 of the second elastic body 6 from the second side in the axial direction.

## Description

### TECHNICAL FIELD

The present disclosure relates to a torque transmission joint that is incorporated into various kinds of mechanical devices and used to transmit torque between a pair of rotating members, and to an electric motor with a worm reducer comprising a torque transmission joint.

### BACKGROUND ART

In an electric power steering device, auxiliary power from an electric motor is applied through a worm reducer to a steering rotating shaft that rotates based on the operation of a steering wheel.

Since unavoidable backlash exists at a meshing area between a worm wheel and a worm of the worm reducer, there is a problem in which a chattering is likely to be generated when the rotation direction of the worm is changed.

JP2004-306898 A describes a structure in which a biasing member including a spring is arranged between a housing and a bearing arranged at a tip end side of the worm of a pair of bearings for supporting a worm with respect to the housing so as to be able to rotate freely, biasing the tip end portion of the worm toward a worm wheel. With such a structure, backlash at a meshing area between the worm wheel and the worm can be suppressed, and the occurrence of chattering at the meshing area can be suppressed.

### CITATION LIST

### PATENT LITERATURE

Patent Literature 1: JP2004-306898 A

### SUMMARY OF INVENTION

### TECHNICAL PROBLEM

In the conventional structure described in JP2004-306898 A, an output shaft of an electric motor and the worm are connected so as to be capable of torque transmission by spline-engaging a spline shaft portion provided at a tip end portion of the output shaft with a spline hole provided at a base end of the worm. If the spline shaft portion and the spline hole are spline-engaged with no gap in the circumferential direction, that is, without backlash, no noise will be generated at the spline-engaged portion between the output shaft and the worm.

However, in such a conventional structure, the worm needs to be oscillated and displaced in order to bias the tip end portion of the worm toward the worm wheel by the biasing member, so that it is not possible to completely eliminate backlash in the spline-engaged portion. Therefore, there is room for improvement in suppressing the generation of noise.

An object according to the present disclosure is to achieve a torque transmission joint that can smoothly transmits torque between a pair of rotating members even if central axes of the pair of rotating members do not coincide with each other, and that can prevent generation of noise between the pair of rotating members, an assembling method thereof, and an electric motor with a worm reducer comprising the torque transmission joint.

### SOLUTION TO PROBLEM

A torque transmission j oint according to one aspect of the present disclosure includes a first rotating member, a second rotating member, a coupling, a first elastic body, and a second elastic body.

The first rotating member has first projection portions protruding toward one side in an axial direction at a plurality of locations in a circumferential direction on a side surface on the one side in the axial direction.

The second rotating member has second projection portions protruding toward the other side in the axial direction at a plurality of locations in the circumferential direction on a side surface on the other side in the axial direction.

The coupling has:
first recess portions arranged at a plurality of locations in the circumferential direction, each having a width in the circumferential direction greater than a width in the circumferential direction of each of the first projection portions, and having openings on the other side in the axial direction through which the first projection portions are respectively inserted,
second recess portions arranged at a plurality of locations in the circumferential direction, each having a width in the circumferential direction greater than a width in the circumferential direction of each of the second projection portions, and having openings on the one side in the axial direction through which the second projection portions are respectively inserted,
first support portions protruding toward the other side in the axial direction from a plurality of locations in the circumferential direction at an end portion on the other side in the axial direction, and respectively arranged between a pair of first projection portions that are adjacent to each other in the circumferential direction of the first projection portions, and
second support portions protruding toward the one side in the axial direction from a plurality of locations in the circumferential direction at an end portion on the one side in the axial direction, and respectively arranged between a pair of second projection portions that are adjacent to each other in the circumferential direction of the second projection portions.

The first elastic body has:
first supported portions arranged at a plurality of locations in the circumferential direction, respectively having an annular shape, and each externally fitted to each of the first projection portions, and
first connecting portions respectively circumferentially connecting outer end portions or inner end portions in a radial direction of a pair of first supported portions that are adjacent to each other in the circumferential direction of the first supported portions,
first elastic pieces, which are portions of the first supported portions respectively located in between the first projection portions and the first support portions that are adjacent to each other in the circumferential direction, respectively held in the circumferential direction between the first projection portions and the first support portions.

The second elastic body has:
second supported portions arranged at a plurality of locations in the circumferential direction, respectively having an annular shape, and each externally fitted to each of the second projection portions, and
second connecting portions respectively circumferentially connecting outer end portions or inner end portions in the radial direction of a pair of second supported portions that are adjacent to each other in the circumferential direction of the second supported portions,
second elastic pieces, which are portions of the second supported portions respectively located in between the second projection portions and the second support portions that are adjacent to each other in the circumferential direction, respectively held in the circumferential direction between the second projection portions and the second support portions.

In the torque transmission joint according to one aspect of the present disclosure, the coupling has first nail portions respectively provided on at least one of an outer side or an inner side in the radial direction of end portions on the other side in the axial direction of the first supported portions and protruding in the radial direction therefrom, and second nail portions respectively provided on at least one of an outer side or an inner side in the radial direction of end portions on the one side in the axial direction of the second support portions and protruding in the radial direction therefrom. The first nail portions engage with the first supported portions from the other side in the axial direction. The second nail portions engage with the second supported portions from the one side in the axial direction.

In the torque transmission joint according to one aspect of the present disclosure, the second recess portions are arranged at a plurality of locations in the circumferential direction, each of which is arranged between a pair of first recess portions that are adjacent to each other in the circumferential direction of the first recess portions.

The coupling includes arm portions each separating the first recess portions and the second recess portions that are adjacent to each other in the circumferential direction, first side plate portions each circumferentially connecting end portions on the one side in the axial direction of a pair of arm portions that exist on both sides in the circumferential direction of the first recess portions of the arm portions, and second side plate portions each circumferentially connecting end portions on the other side in the axial direction of a pair of arm portions that exist on both sides in the circumferential direction of the second recess portions of the arm portions.

The first support portions respectively protrude toward the other side in the axial direction from side surfaces on the other side in the axial direction of the second side plate portions, and the second support portions respectively protrude toward the one side in the axial direction from side surfaces on the one side in the axial direction of the first side plate portions.

In the torque transmission joint according to one aspect of the present disclosure, side surfaces on the other side in the axial direction of the first nail portions and side surfaces on the one side in the axial direction of the second nail portions are formed of inclined guide surfaces that are inclined in a direction such that an axial width thereof becomes smaller as going toward a tip end side in the radial direction.

In the torque transmission joint according to one aspect of the present disclosure, the first nail portions are provided on both the outer side and the inner side in the radial direction of the end portions on the other side in the axial direction of the first support portions. The second nail portions are provided on both the outer side and the inner side in the radial direction of the end portions on the one side in the axial direction of the second support portions.

Each of the first connecting portions circumferentially connects outer end portions in the radial direction of the pair of the first supported portions, and a circumferential length of the first nail portions on the outer side in the radial direction is greater than a circumferential length of the first nail portions on the inner side in the radial direction. Each of the second connecting portions circumferentially connects outer end portions in the radial direction of the pair of the second supported portions, and a circumferential length of the second nail portions on the outer side in the radial direction is greater than a circumferential length of the second nail portions on the inner side in the radial direction.

In the torque transmission joint according to one aspect of the present disclosure, the first elastic pieces respectively have a first elastic protrusion that protrudes in the circumferential direction on a portion in the radial direction on a side surface in the circumferential direction that faces an outer side surface in the circumferential direction of each of the first projection portions and abuts against the outer side surface in the circumferential direction of each of the first projection portions with an interference. The second elastic pieces respectively have a second elastic protrusion that protrudes in the circumferential direction on a portion in the radial direction on a side surface in the circumferential direction that faces an outer side surface in the circumferential direction of each of the second projection portions and abuts against the outer side surface in the circumferential direction of each of the second projection portions with an interference.

In the torque transmission joint according to one aspect of the present disclosure, the first elastic body has first chamfered portions respectively provided at a connecting portion between a side surface on the other side in the axial direction of each of the first elastic pieces and a side surface in the circumferential direction of each of the first elastic pieces that faces an outer side surface in the circumferential direction of each of the first projection portions. The second elastic body has second chamfered portions respectively provided at a connecting portion between a side surface on the one side in the axial direction of each of the second elastic pieces and a side surface in the circumferential direction of each of the second elastic pieces that faces an outer side surface in the circumferential direction of each of the second projection portions.

In the torque transmission joint according to one aspect of the present disclosure, the first rotating member has a first base portion having a side surface on the one side in the axial direction from which the first projection portions protrude toward the one side in the axial direction, and has first corner portions respectively provided at connecting portions between side surfaces on both sides in the circumferential direction of each of the first projection portions and the side surface on the one side in the axial direction of the first base portion, each of the first corner portions being inclined in a direction away from a center portion of each of the first projection portions in the circumferential direction as going to the other side in the axial direction.

The second rotating member has a second base portion having a side surface on the other side in the axial direction from which the second projection portions protrude toward the other side in the axial direction, and has second corner portions respectively provided at connecting portions between side surfaces on both sides in the circumferential direction of each of the second projection portions and the side surface on the other side in the axial direction of the second base portion, each of the second corner portions being inclined in a direction away from a center portion of each of the second projection portions in the circumferential direction as going to the one side in the axial direction.

In the torque transmission joint according to one aspect of the present disclosure, an axial width dimension of each of the first chamfered portions is greater than or equal to an axial width dimension of each of the first corner portions, and a circumferential width dimension of each of the first chamfered portions is greater than or equal to a circumferential width dimension of each of the first corner portions. An axial width dimension of each of the second chamfered portions is greater than or equal to an axial width dimension of each of the second corner portions, and a circumferential width dimension of each of the second chamfered portions is greater than or equal to a circumferential width dimension of each of the second corner portions.

In the torque transmission joint according to one aspect of the present disclosure, an inner side portion in the radial direction of each of side surfaces on the other side in the axial direction of the first support portions is formed of a first flat surface perpendicular to the axial direction of the coupling, and an outer side portion in the radial direction thereof is formed of a first inclined surface that is inclined in a direction toward the one side in the axial direction as going to the outer side in the radial direction.

An inner side portion in the radial direction of each of side surfaces on the one side in the axial direction of the second support portions is formed of a second flat surface perpendicular to the axial direction of the coupling, and an outer side portion in the radial direction thereof is formed of a second inclined surface that is inclined in a direction toward the other side in the axial direction as going to the outer side in the radial direction.

The present disclosure may be implemented by appropriately combining the structure of each aspect described above as long as no contradiction occurs.

A method for assembling a torque transmission joint according to one aspect of the present disclosure includes steps of:
assembling the first elastic body to a portion on the other side in the axial direction of the coupling with the second flat surfaces of the second support portions of the coupling abutting against an upper surface of a support base, and
assembling the second elastic body to a portion on the one side in the axial direction of the coupling with the first flat surfaces of the first support portions of the coupling abutting against the upper surface of the support base.

An electric motor with a worm reducer according to one aspect of the present disclosure includes
an electric motor having an output shaft,
a worm reducer including
   a worm wheel having wheel teeth on an outer circumferential surface thereof, and
   a worm having worm teeth on an outer circumferential surface thereof, the worm teeth meshing with the wheel teeth, and
a torque transmission joint connecting the output shaft and the worm so as to be capable of torque transmission.

As the torque transmission joint, the torque transmission joint according to one aspect of the present disclosure is used, and the first rotating member is either fixed to the output shaft or integrally formed with the output shaft, and the second rotating member is either fixed to the worm or integrally formed with the worm.

### EFFECT OF INVENTION

With the one aspect of the present disclosure, it is possible to provide a torque transmission joint that can smoothly transmit torque between the pair of rotating members even if central axes of the pair of rotating members do not coincide with each other, and that can prevent generation of noise between the pair of rotating members, an assembling method thereof, and an electric motor with a worm reducer including the torque transmission joint.

### BRIEF DESCRIPTION OF DRAWINGS

FIG. 1 is a side view in partial cross section illustrating an electric power steering device including a torque transmission joint of a first example of an embodiment of the present disclosure.
FIG. 2 is a cross-sectional view of section A-A in FIG. 1.
FIG. 3 is a side view of the torque transmission joint of the first example.
FIG. 4 is a cross-sectional view of section B-B in FIG. 3.
FIG. 5 is a cross-sectional view of section C-C in FIG. 3.
FIG. 6 is a perspective view illustrating a part of the torque transmission joint of the first example.
FIG. 7A is a side view illustrating an assembly of a coupling, a first elastic body, and a second elastic body of the torque transmission joint of the first example, and FIG. 7B is an end view of the assembly as seen from the right side of FIG. 7A.
FIG. 8 is a cross-sectional view of section of D-D in FIG. 7B.
FIG. 9 is an enlarged view of an upper right portion of FIG. 8 with some parts omitted.
FIG. 10 is an exploded perspective view of the assembly of the first example.
FIG. 11A is an end view illustrating a first rotating member of the first example, FIG. 11B is a side view of the first rotating member as seen from the right side of FIG. 11A, and FIG. 11C is a cross-sectional view of section E-E in FIG. 11A.
FIG. 12A is an end view illustrating a second rotating member of the first example, FIG. 12B is a side view of the second rotating member as seen from the left side of FIG. 12A, and FIG. 12C is a cross-sectional view of section F-F in FIG. 12A.
FIG. 13A is a side view illustrating a coupling of the first example, FIG. 13B is an end view of the coupling as seen from the right side of FIG. 13A, and FIG. 13C is a cross-sectional view of section G-G in FIG. 13B.
FIG. 14A is a side view of an elastic body of the first example, and FIG. 14B is an end view of the elastic body as seen from the right side of FIG. 14A.
FIG. 15A is a cross-sectional view of section H-H of FIG. 14B, and FIG. 15B is a cross-sectional view of section I-I of FIG. 14B.
FIG. 16A to FIG. 16D are side views illustrating assembly work of the assembly of the first example in the order of steps.
FIG. 17 is a view of a portion in the circumferential direction of an assembly of a coupling, a first elastic body, and a second elastic body of a torque transmission joint of a second example of an embodiment of the present disclosure when viewed from the axial direction.
FIG. 18 is a perspective view of FIG. 17.
FIG. 19 is a cross-sectional view of section J-J of FIG. 17.
FIG. 20A and FIG. 20B are views corresponding to FIG. 11A and FIG. 11B, illustrating the first rotating member of the second example.
FIG. 21A and FIG. 21B are views corresponding to FIG. 12A and FIG. 12B, illustrating the second rotating member of the second example.

### DESCRIPTION OF EMBODIMENTS

### [First Example]

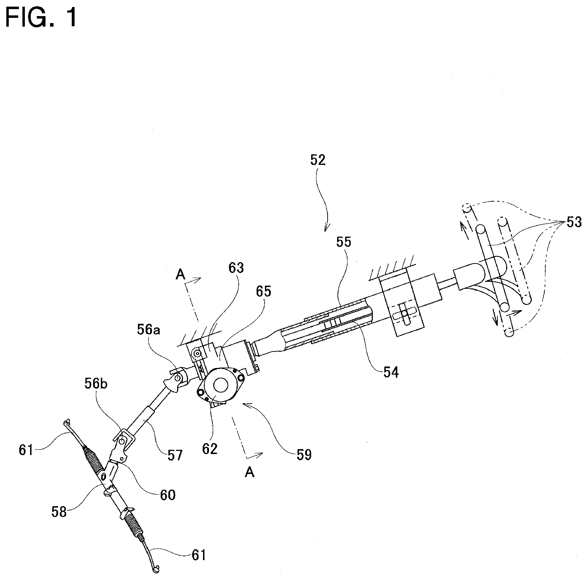

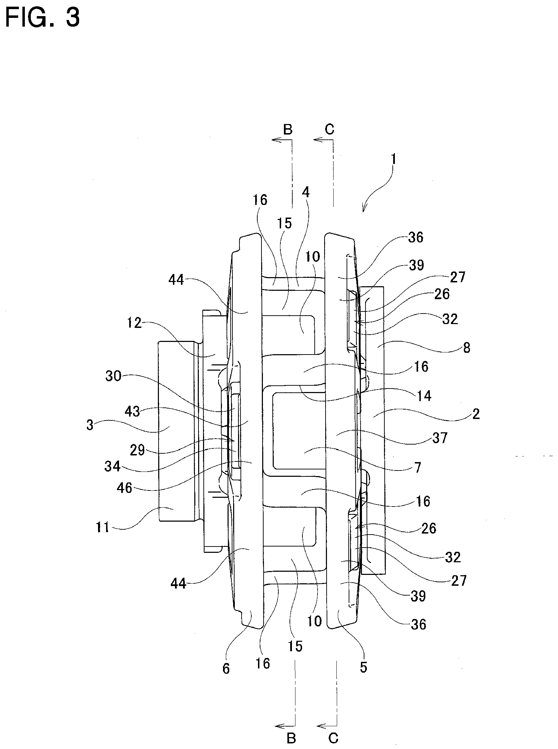

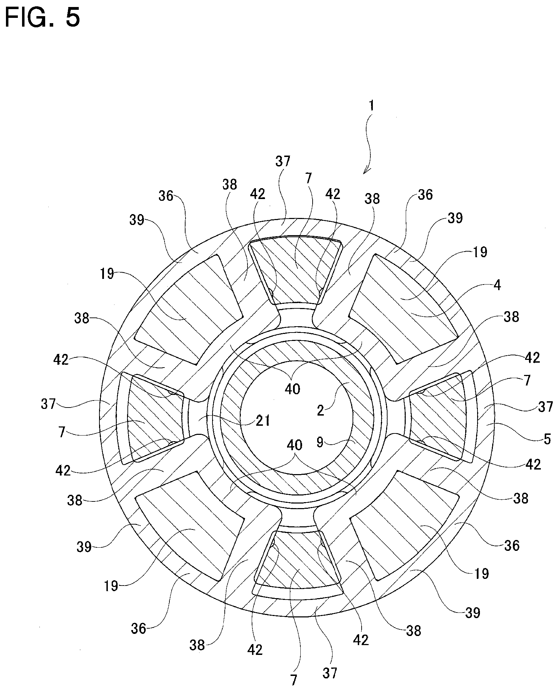

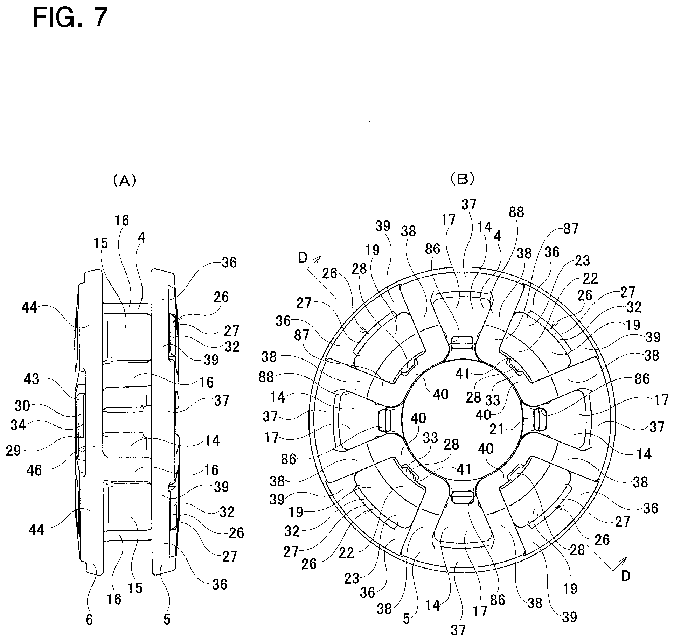

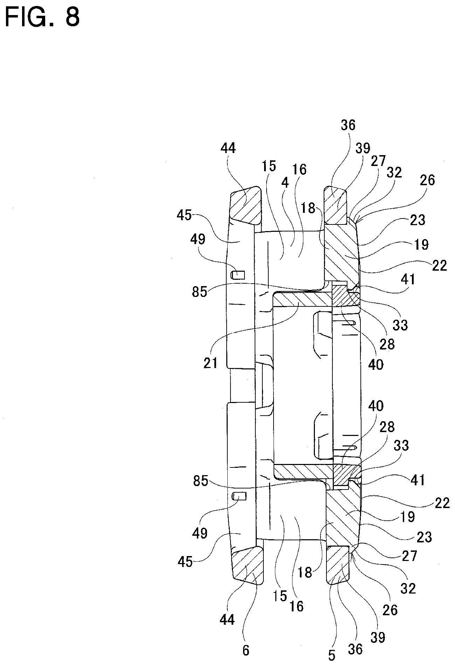

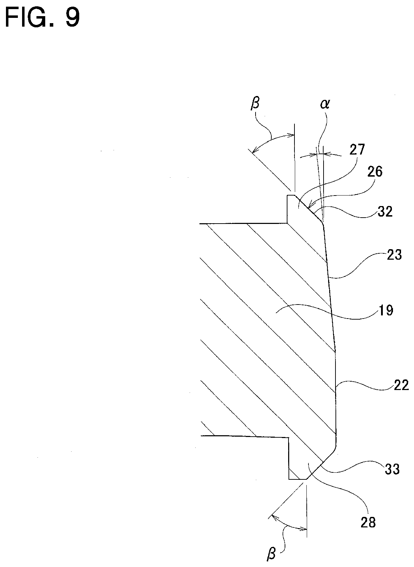

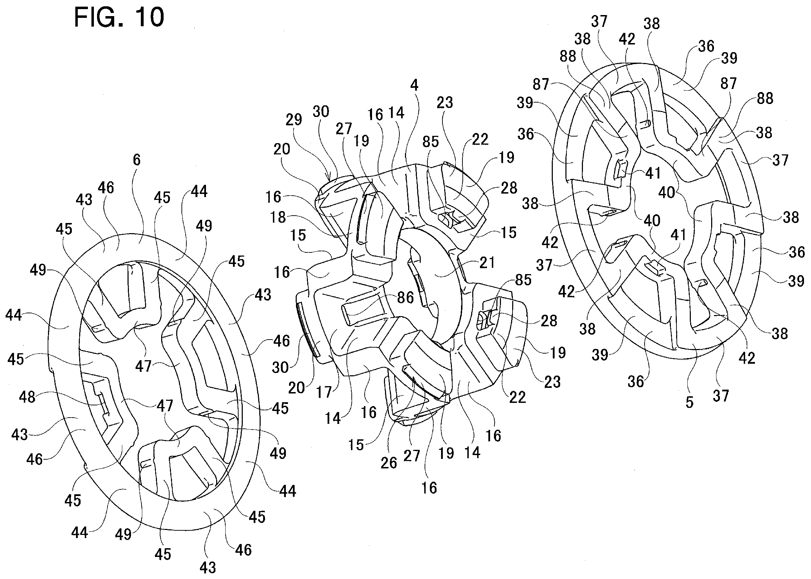

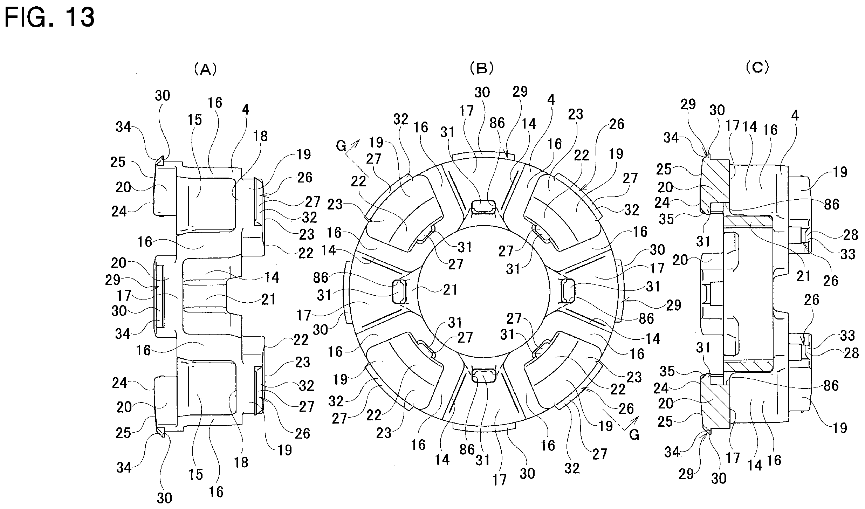

A first example of an embodiment of the present disclosure will be described with reference to FIG. 1 to FIG. 16.

### (1) Torque transmission joint

A torque transmission joint of the present disclosure is incorporated into a portion of various kinds of mechanical devices and can be applied as a torque transmission joint that smoothly transmits torque between a pair of rotating members. In the present example, a case will be described in which the torque transmission joint of the present disclosure is applied to a torque transmission joint incorporated into an electric assist device of an electric power steering device.

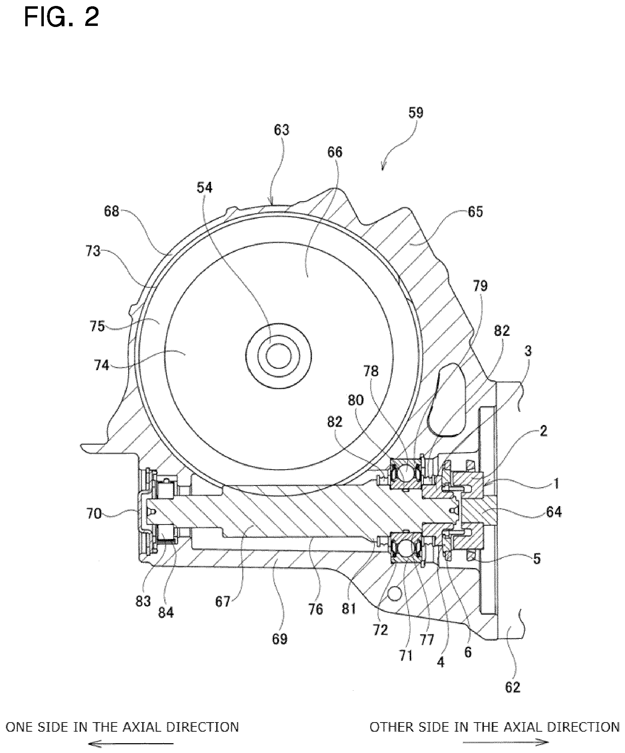

In the following description regarding a torque transmission joint 1 of the present example, one side in the axial direction is the left side in FIG. 2, FIG. 3, FIG. 6, FIG. 7A, and FIG. 8, and the other side in the axial direction is the right side in these figures.

The torque transmission joint 1 of the present example includes a first rotating member 2, a second rotating member 3, a coupling 4, a first elastic body 5, and a second elastic body 6.

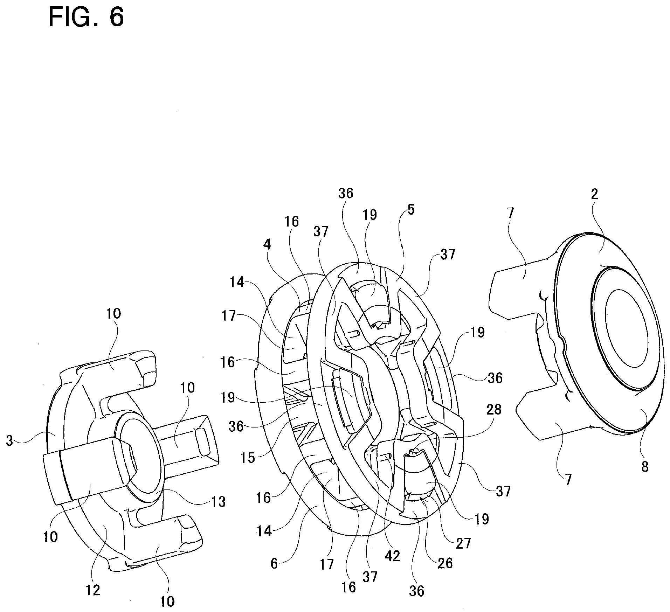

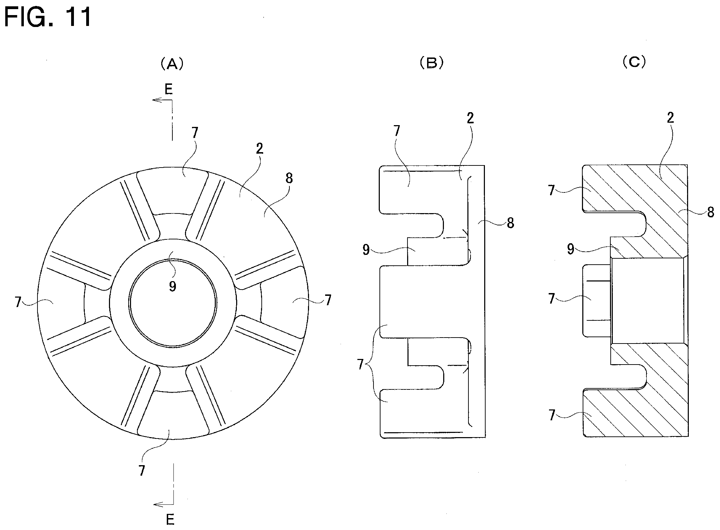

As illustrated in FIG. 6 and FIG. 11A to FIG. 11C, the first rotating member 2 has first projection portions 7 that protrude toward the one side in the axial direction at a plurality of locations in the circumferential direction on a side surface on the one side in the axial direction.

In the present example, the first rotating member 2 includes an annular-plate-shaped first base portion 8. The first projection portions 7 protrude toward the one side in the axial direction from a plurality of locations uniformly spaced in the circumferential direction (four locations in the illustrated example) at an end portion on the outer side in the radial direction of the side surface on the one side in the axial direction of the first base portion 8. The first projection portions 7 respectively have a fan-shaped end surface when viewed from the axial direction. The first rotating member 2 has a cylindrical protruding portion 9 that protrudes from an end portion on the inner side in the radial direction of the side surface on the one side in the axial direction of the first base portion 8 toward the one side in the axial direction over the entire circumference. The protruding portion 9 is a portion for ensuring the length in the axial direction of a central hole of the first rotating member 2.

The first rotating member 2 is made of a material that is more rigid than the material of the first elastic body 5, that is, a material that is difficult to deform elastically, such as synthetic resin or metal (including sintered metal).

The first rotating member 2 is externally fitted and fixed to an end portion of one of the pair of rotating members to be connected to each other (in the present example, output shaft 64 of electric motor 62 (see FIG. 2)) so as to be capable of torque transmission.

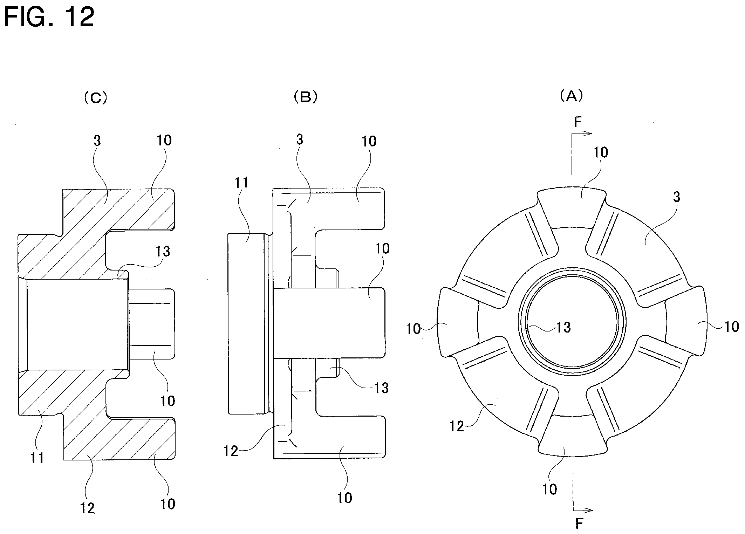

As illustrated in FIG. 6 and FIG. 12A to FIG. 12C, the second rotating member 3 has second projection portions 10 that protrude toward the other side in the axial direction at a plurality of locations in the circumferential direction on a side surface on the other side in the axial direction.

In the present example, the second rotating member 3 includes an annular-plate-shaped second base portion 12. The second projection portions 10 protrude toward the other side in the axial direction from a plurality of locations uniformly spaced in the circumferential direction (four locations in the illustrated example) at an end portion on the outer side in the radial direction of the side surface on the other side in the axial direction of the second base portion 12. The second projection portions 10 respectively have a fan-shaped end surface when viewed from the axial direction. The second rotating member 3 has a cylindrical protruding portion 11 that protrudes from a half portion on the inner side in the radial direction of the side surface on the one side in the axial direction of the second base portion 12 toward the one side in the axial direction over the entire circumference, and a cylindrical protruding portion 13 that protrudes from an end portion on the inner side in the radial direction of the side surface on the other side in the axial direction of the second base portion 12 toward the other side in the axial direction over the entire circumference. The protruding portions 11, 13 are portions for ensuring the length in the axial direction of a central hole of the second rotating member 3.

The second rotating member 3 is made of a material that is more rigid than the material of the second elastic body 6, such as synthetic resin or metal (including sintered metal). The second rotating member 3 may be made of the same material as that of the first rotating member 2, or may be made of a different material.

The second rotating member 3 is externally fitted and fixed to an end portion of the other rotating member of the pair of rotating members to be connected to each other (in the present example, worm 67 (see FIG. 2)) so as to be capable of torque transmission.

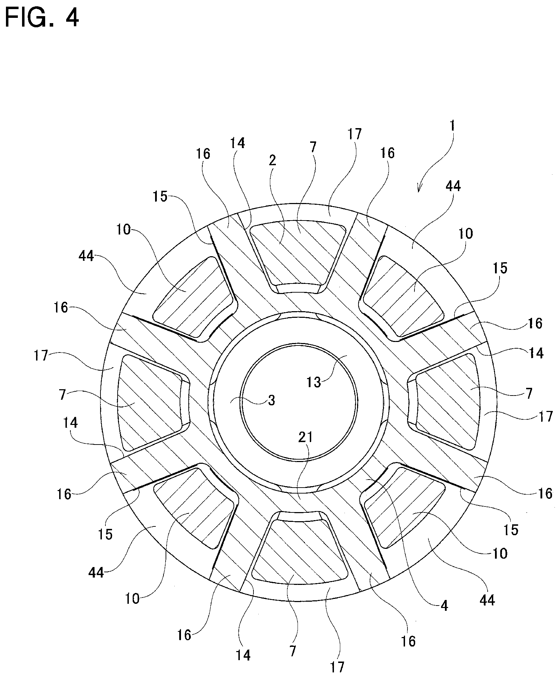

As illustrated in FIG. 4, FIG. 10, and FIG. 13A to FIG. 13C, the coupling 4 has first recess portions 14, second recess portions 15, first support portions 19, and second support portions 20.

The first recess portions 14 are arranged at a plurality of locations in the circumferential direction (four locations in the illustrated example) of the coupling 4, respectively have a width in the circumferential direction that is greater than the width in the circumferential direction of each of the first projection portions 7, and open to the other side in the axial direction through which the first projection portions 7 are inserted. In the present example, the first recess portions 14 are open not only to the other side in the axial direction but also to the radial outer side.

The second recess portions 15 are arranged at a plurality of locations in the circumferential direction (four locations in the illustrated example), respectively have a width in the circumferential direction that is greater than the width in the circumferential direction of each of the second projection portions 10, and open to the one side in the axial direction through which the second projection portions 10 are inserted. In the present example, the second recess portions 15 are open not only to the one side in the axial direction but also to the radial outer side. In the present example, the second recess portions 15 are respectively arranged at a plurality of locations in the circumferential direction so as to be located in between a pair of the first recess portions 14 adjacent to each other in the circumferential direction.

In the present example, the coupling 4 further includes arm portions 16. The arm portions 16 are portions that separate the first recess portions 14 and the second recess portions 15 that are adjacent to each other in the circumferential direction.

In the present example, the arm portions 16 are formed in a rectangular plate shape and are arranged radially around the central axis of the coupling 4. In the present example, the coupling 4 further includes a cylindrical boss portion 21 at the center portion in the radial direction. The arm portions 16 protrude radially outward in the radial direction from a plurality of locations in the circumferential direction on the outer circumferential surface of the boss portion 21. The inner side in the radial direction of the first recess portions 14 and the second recess portions 15 is not open and is blocked by the boss portion 21.

In the present example, the coupling 4 further includes first side plate portions 17. The first side plate portions 17 are portions that circumferentially connect end portions on the one side in the axial direction of the pair of arm portions 16 that exist on both sides in the circumferential direction of the first recess portions 14.

In the present example, the first side plate portions 17 respectively have a fan-shaped end surface when viewed from the axial direction. End portions on the inner side in the radial direction of the first side plate portions 17 are connected to the outer circumferential surface of an end portion on the one side in the axial direction of the boss portion 21. The side on the one side in the axial direction of the first recess portions 14 is not open and is blocked by the first side plate portions 17.

In the present example, the coupling 4 further includes second side plate portions 18. The second side plate portions 18 are portions that circumferentially connect end portions on the other side in the axial direction of the pair of arm portions 16 that exist on both sides in the circumferential direction of the second recess portions 15.

In the present example, the second side plate portions 18 respectively have a fan-shaped end surface when viewed from the axial direction. End portions on the inner side in the radial direction of the second side plate portions 18 are connected to the outer circumferential surface of an end portion on the other side in the axial direction of the boss portion 21. The other side in the axial direction of the second recess portions 15 is not open and is blocked by the second side plate portions 18.

In the present example, each of the first recess portions 14 is defined by the outer circumferential surface of the boss portion 21, a side surface on the other side in the axial direction of the first side plate portion 17, and opposing circumferential side surfaces of the pair of arm portions 16 that are circumferentially connected by the first side plate portion 17. The first projection portions 7 of the first rotating member 2 are inserted into the first recess portions 14 through openings on the other side in the axial direction.

The first recess portions 14 respectively have a width in the circumferential direction that is greater than the width in the circumferential direction of each of the first projection portions 7. Therefore, the first projection portions 7 of the first rotating member 2 are inserted into the respective first recess portions 14 so as to be capable of relative displacement in the circumferential direction. That is, when the first projection portions 7 are arranged inside the first recess portions 14, a circumferential gap exists in at least one of the areas between the inner side surfaces on both sides in the circumferential direction of each of the first recess portions 14 and the outer side surfaces on both sides in the circumferential direction of each of the first projection portions 7. Furthermore, a radial gap exists between the inner side surfaces in the radial direction of the first projection portions 7 and the outer circumferential surface of the boss portion 21.

In the present example, each of the second recess portions 15 is defined by the outer circumferential surface of the boss portion 21, a side surface on the one side in the axial direction of the second side plate portion 18, and opposing circumferential side surfaces of the pair of arm portions 16 that are circumferentially connected by the second side plate portions 18. The second projection portions 10 of the second rotating member 3 are inserted into the second recess portions 15 through openings on the one side in the axial direction.

The second recess portions 15 respectively have a width in the circumferential direction that is greater than the width in the circumferential direction of each of the second projection portions 10. Therefore, the second projection portions 10 of the second rotating member 3 are inserted into the respective second recess portions 15 so as to be capable of relative displacement in the circumferential direction. That is, when the second projection portions 10 are arranged inside the second recess portions 15, a circumferential gap exists in at least one of the areas between the inner side surfaces on both sides in the circumferential direction of each of the second recess portions 15 and the outer side surfaces on both sides in the circumferential direction of each of the second projection portions 10. Furthermore, a radial gap exists between the inner side surfaces in the radial direction of the second projection portions 10 and the outer circumferential surface of the boss portion 21.

In other words, the first projection portions 7 of the first rotating member 2 and the second projection portions 10 of the second rotating member 3 are arranged alternately in the circumferential direction, and the arm portions 16 of the coupling 4 are arranged between the first projection portions 7 and the second projection portions 10 that are adjacent to each other in the circumferential direction so as to be capable of displacement in the circumferential direction.

Instead of providing the boss portion 21 at the center portion in the radial direction of the coupling 4, a cylindrical portion can be provided on an outer circumferential portion, which is the outer side portion in the radial direction of the coupling, and the outer end portions in the radial direction of the arm portions 16, the first side plate portions 17, and the second side plate portions 18 can be connected to an inner circumferential surface of the cylindrical portion.

In this case, each of the first recess portions is defined by the inner circumferential surface of the cylindrical portion, a side surface on the other side in the axial direction of the first side plate portion 17, and opposing circumferential side surfaces of the pair of arm portions 16 that are circumferentially connected by the first side plate portion 17. Furthermore, each of the second recess portions is defined by the inner circumferential surface of the cylindrical portion, a side surface on the one side in the axial direction of the second side plate portion 18, and opposing circumferential side surfaces of the pair of arm portions 16 that are circumferentially connected by the second side plate portions 18. Further, a radial gap exists between each of the outer side surfaces in the radial direction of the first projection portions 7 and the second projection portions 10 and the inner circumferential surface of the cylindrical portion.

In a case that the rigidity of the coupling can be sufficiently ensured, the boss portion 21 and the cylindrical portion may be omitted.

Furthermore, in the structure of the coupling of the present example, the first recess portions and the second recess portions are arranged at different positions in the circumferential direction, however, in a case of implementing a structure of the present disclosure, the first recess portions and the second recess portions may also be arranged at the same positions in the circumferential direction. In this case, in the coupling, the first recess portions are arranged on the other side in the axial direction and the second recess portions are arranged on the one side in the axial direction.

The first support portions 19 are portions for supporting the first elastic body 5. In the coupling 4, the first support portions 19 protrude toward the other side in the axial direction from a plurality of locations in the circumferential direction at end portions on the other side in the axial direction. In the present example, the first support portions 19 protrude toward the other side in the axial direction from the side surfaces on the other side in the axial direction of the second side plate portions 18.

In the present example, each of the first support portions 19 has a fan-shaped end surface when viewed from the axial direction. In the present example, the inner side portion in the radial direction of the side surface on the other side in the axial direction of each of the first support portions 19 is formed of a first flat surface 22 perpendicular to the axial direction of the coupling 4, and the outer side portions in the radial direction of the side surface on the other side in the axial direction of each of the first support portions 19 is formed of a first inclined surface 23 that is inclined in a direction toward the one side in the axial direction as going to the outer side in the radial direction. The end portions in the radial direction of the first flat surfaces 22 are respectively connected to the inner end portions in the radial direction of the first inclined surfaces 23.

The first inclined surfaces 23 are provided so that, when the central axis of the first rotating member 2 and the central axis of the coupling 4 are inclined during use, the outer side portions in the radial direction (the first inclined surfaces 23) of the side surfaces on the other side in the axial direction of the first support portions 19 are less likely to interfere with the side surfaces on the one side in the axial direction of the first rotating member 2, specifically, the side surfaces on the one side in the axial direction of the first base portion 8.

The second support portions 20 are portions for supporting the second elastic body 6. In the coupling 4, the second support portions 20 protrude toward the one side in the axial direction from a plurality of locations in the circumferential direction at end portions on the one side in the axial direction. In the present example, the second support portions 20 protrude toward the one side in the axial direction from the side surfaces on the one side in the axial direction of the first side plate portions 17.

In the present example, each of the second support portions 20 has a fan-shaped end surface when viewed from the axial direction. In the present example, the inner side portions in the radial direction of the side surfaces on the one side in the axial direction of the second support portions 20 are formed of second flat surfaces 24 perpendicular to the axial direction of the coupling 4, and the outer side portions in the radial direction of the side surfaces on the one side in the axial direction of the second support portions 20 are formed of second inclined surfaces 25 that are inclined toward the other side in the axial direction as going to the outer side in the radial direction.

The second inclined surfaces 25 are provided so that, when the central axis of the second rotating member 3 and the central axis of the coupling 4 are inclined during use, the outer side portions in the radial direction (the second inclined surfaces 25) of the side surfaces on the one side in the axial direction of the second support portions 20 are less likely to interfere with the side surfaces on the other side in the axial direction of the second rotating member 3, specifically, the side surfaces on the other side in the axial direction of the second base portion 12.

The inclination angle α of each of the first inclined surfaces 23 and the second inclined surfaces 25 with respect to an imaginary flat plane perpendicular to the central axis of the coupling 4 can be set arbitrarily, but is preferably set to 1° to 10°.

The coupling 4 has first nail portions 26 that protrude in the radial direction from at least one of the outer side or inner sides in the radial direction of the end portions on the other side in the axial direction of the first support portions 19, and second nail portions 29 that protrude in the radial direction from at least one of the outer side or inner side in the radial direction of the end portions on the one side in the axial direction of the second support portions 20. In the coupling 4 of the present example, the first nail portions 26 protrude from both the outer side and inner side in the radial direction of the end portions on the other side in the axial direction of the first support portions 19, and the second nail portions 29 protrude from both the outer side and l inner sides in the radial direction of the end portions on the one side in the axial direction of the second support portions 20.

The first nail portions 26 are portions for preventing the first elastic body 5 from falling off in the axial direction from the first support portions 19. The second nail portions 29 are portions for preventing the second elastic body 6 from falling off in the axial direction from the second support portions 20.

When the first nail portions 26 are provided only on one of the outer side or inner side in the radial direction of the first support portions, or when the second nail portions 29 are provided only on one of the outer side or inner side in the radial direction of the second support portions, it is preferable to provide the first nail portions 26 or the second nail portions 29 on the outer side in the radial direction. The reason for this is that it is easier to form the first nail portions 26 or the second nail portions 29 on the outer side than on the inner sides, and since the circumferential length of the first nail portions 26 or the second nail portions 29 can be made long, it is easier to ensure the rigidity of the coupling and it is easier to prevent the first elastic body 5 or the second elastic body 6 from falling off.

In the present example, the first nail portions 26 comprise first outer side nail portions 27 on the outer side in the radial direction and first inner side nail portions 28 on the inner side in the radial direction. The first outer side nail portions 27 respectively protrude toward the outer side in the radial direction from a middle portion in the circumferential direction of the outer side surface in the radial direction of an end portion on the other side in the axial direction of each of the first support portions 19. The first inner side nail portions 28 respectively protrude toward the inner side in the radial direction from a middle portion in the circumferential direction of the inner side surface in the radial direction of an end portion on the other side in the axial direction of each of the first support portions 19. The circumferential length relationship between the first outer side nail portions 27 and the first inner side nail portions 28 can be determined arbitrarily, however, in the present example, the circumferential length of each of the first outer side nail portions 27 is made greater than the circumferential length of each of the first inner side nail portions 28.

In the present example, a through hole 85 is formed in a portion of each of the second side plate portions 18 that overlaps with the first inner side nail portion 28 in the axial direction. The through holes 85 are portions formed as passages when a mold part for molding side surfaces on the one side in the axial direction of the first inner side nail portions 28, among a plurality of mold parts used when manufacturing the coupling 4 by injection molding, is pulled out toward the one side in the axial direction when the mold is opened.

In the present example, the second nail portions 29 comprise second outer side nail portions 30 on the outer side in the radial direction and second inner side nail portions 31 on the inner side in the radial direction. The second outer side nail portions 30 respectively protrude toward the outer side in the radial direction from a middle portion in the circumferential direction of the outer side surface in the radial direction of an end portion on the one side in the axial direction of each of the second support portion 20. The second inner side nail portions 31 respectively protrude toward the inner side in the radial direction from a middle portion in the circumferential direction of the inner side surface in the radial direction of an end portion on the one side in the axial direction of each of the second support portions 20. The circumferential length relationship between the second outer side nail portions 30 and the second inner side nail portions 31 can be determined arbitrarily, however, in the present example, the circumferential length of each of the second outer side nail portion 30 is made greater than the circumferential length of each of the second inner side nail portion 31.

In the present example, a through hole 86 is formed in a portion of each of the first side plate portions 17 that overlaps with the second inner side nail portion 31 in the axial direction. The through holes 86 are portions formed as passages when a mold part for molding a side surface on the other side in the axial direction of the second inner side nail portion 31, among a plurality of mold parts used when manufacturing the coupling 4 by injection molding, is pulled out toward the other side in the axial direction when the mold is opened.

In the present example, the side surfaces on the other side in the axial direction of the first outer side nail portions 27 and the first inner side nail portions 28 of the first nail portions 26 and the side surfaces on the one side in the axial direction of the second outer side nail portions 30 and the second inner side nail portions 31 of the second nail portions 29 are formed of inclined guide surfaces 32, 33, 34, 35 which are inclined in a direction in which the axial width of the nail portions becomes smaller as going to the tip end side in the radial direction.

In other words, the first outer side inclined guide surface 32 of the side surface on the other side in the axial direction of each of the first outer side nail portions 27 is inclined toward the one side in the axial direction as going to the outer side in the radial direction. The first inner side inclined guide surface 33 of the side surface on the other side in the axial direction of each of the first inner side nail portions 28 is inclined toward the one side in the axial direction as going to the inner side in the radial direction. The first outer side inclined guide surface 32 and the first inner side inclined guide surface 33 are portions that function as guide surfaces when assembling the first elastic body 5 to the first support portions 19.

The second outer side inclined guide surface 34 of the side surface on the one side in the axial direction of each of the second outer side nail portions 30 is inclined toward the other side in the axial direction as going to the outer side in the radial direction. The second inner side inclined guide surface 35 of the side surface on the one side in the axial direction of each of the second inner side nail portion 31 is inclined toward the other side in the axial direction as going to the inner side in the radial direction. The second outer side inclined guide surface 34 and the second inner side inclined guide surface 35 are portions that function as guide surfaces when assembling the second elastic body 6 to the second support portions 20.

The inclination angle β of the inclined guide surfaces 32, 33, 34, 35 with respect to an imaginary flat plane perpendicular to the axial direction of the coupling 4 can be set arbitrarily, but is preferably set to 15° to 60°. In the present example, the inclination angle β is set later than the inclination angle α (β>α).

In the present example, the side surfaces on the one side in the axial direction of the first outer side nail portions 27 and the first inner side nail portions 28 and the side surfaces on the other side in the axial direction of the second outer side nail portions 30 and the second inner side nail portions 31 are formed of flat surfaces perpendicular to the axial direction of the coupling 4.

The coupling 4 is made of a material that is more rigid than the material of the first elastic body 5 and the second elastic body 6, and that can reduce the impact when it comes into contact with the first projection portions 7 of the first rotating member 2 and the second projection portions 10 of the second rotating member 3. Specifically, the coupling 4 can be made of resins such as polyphenylene sulfide (PPS), polyether ether ketone (PEEK), nylon, or resins made by mixing reinforcing fibers into these resins, elastomers such as rubber, or belt materials made of rubber reinforced with woven fabric, or the like.

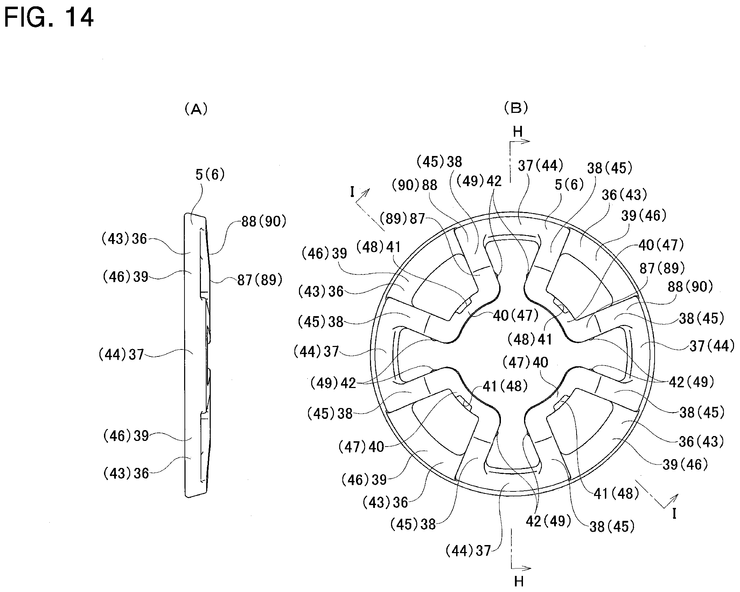

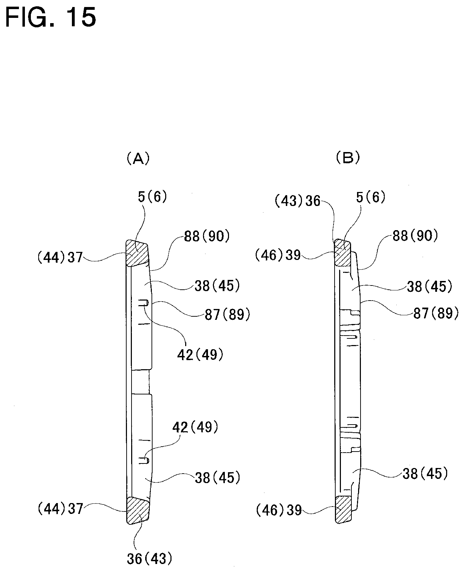

As illustrated in FIG. 14A, FIG. 14B, FIG. 15A, and FIG. 15B, the first elastic body 5 has first supported portions 36 arranged at a plurality of locations in the circumferential direction (four locations in the illustrated example) and respectively having an annular shape, and first connecting portions 37 each circumferentially connecting outer end portions or inner end portions in the radial direction (in the present example, outer end portions in the radial direction) of a pair of the first supported portions 36 that are adjacent to each other in the circumferential direction. The first supported portions 36 are externally fitted to the first projection portions 7 of the first rotating member 2. The first elastic pieces 38, which are portions of the first supported portions 36 located in between the first projection portions 7 and the first support portions 19 that are adjacent to each other in the circumferential direction, are held in the circumferential direction therebetween.

In the present example, each of the first elastic pieces 38 is formed in a rectangular column shape, and the first elastic pieces 38 are radially arranged.

Each of the first supported portions 36 of the first elastic body 5 comprises a pair of first elastic pieces 38 that are adjacent to each other in the circumferential direction, a first outer side engaging piece 39, and a first inner side engaging piece 40. The first outer side engaging piece 39 circumferentially connects outer end portions in the radial direction of the pair of the first elastic pieces 38. The first inner side engaging piece 40 circumferentially connects inner end portions in the radial direction of the pair of the first elastic pieces 38. The first outer side engaging piece 39 and the first inner side engaging piece 40 respectively have an arc-shaped end surface shape when viewed from the axial direction. The first supported portion 36 can be respectively externally fitted to the first projection portions 7 of the first rotating member 2 without any looseness in the circumferential direction and the radial direction.

The first connecting portions 37 of the first elastic body 5 are arranged at positions circumferentially offset from the first outer side engaging pieces 39, and circumferentially connect the outer end portions in the radial direction of a pair of first elastic pieces 38 that are adjacent to each other in the circumferential direction. Each of the first connecting portions 37 has an arc-shaped end surface shape when viewed from the axial direction. The first connecting portions 37 and the first outer side engaging pieces 39 are arranged alternately in the circumferential direction so as to form a ring shape as a whole. Instead of circumferentially connecting the outer end portions in the radial direction of the pair of the first elastic pieces that are adjacent to each other in the circumferential direction by the first connecting portions, it is also possible to circumferentially connect the inner end portions in the radial direction of the pair of the first elastic pieces by the first connecting portions.

In the present example, the axial thickness of the first outer side engaging pieces 39 is smaller than the axial thickness of the first elastic pieces 38, the first inner side engaging pieces 40, and the first connecting portions 37. Specifically, the axial thickness of the first outer side engaging pieces 39 is approximately half the axial thickness of the first elastic pieces 38, the first inner side engaging pieces 40, and the first connecting portions 37. The side surfaces on the other side in the axial direction of the first outer side engaging pieces 39 of the first elastic body 5 are located on the one side in the axial direction of the side surface on the other side in the axial direction of the remaining portions.

In the present example, each of the first inner side engaging pieces 40 has a notch 41 in a middle portion in the circumferential direction of a half portion on the other side in the axial direction, which is open to the outer side in the radial direction and the other side in the axial direction.

The first elastic body 5 is provided with peripheral portions respectively arranged around the first projection portions 7, specifically, the peripheral portions respectively comprising the first connecting portion 37 and the pair of the first elastic pieces 38 that are connected by the first connecting portion 37. The inner side portions in the radial direction of the side surfaces on the other side in the axial direction of the peripheral portions are formed of first elastic flat surfaces 87 perpendicular to the axial direction of the first elastic body 5, and the outer side portions in the radial direction of the side surfaces on the other side in the axial direction of the peripheral portions are formed of first elastic inclined surfaces 88 that are inclined toward the one side in the axial direction as going to the outer side in the radial direction. The outer end portions in the radial direction of the first elastic flat surfaces 87 are connected to the inner end portions in the radial direction of the first elastic inclined surfaces 88. In the present example, the inclination angle of the first elastic inclined surfaces 88 with respect to the first elastic flat surfaces 87 is set to be substantially the same as the inclination angle of the first inclined surfaces 23 with respect to the first flat surfaces 22.

The first elastic inclined surfaces 88 are provided so that, when the central axis of the first rotating member 2 and the central axis of the first elastic body 5 are inclined during use, the outer side portions in the radial direction (the first elastic inclined surfaces 88) of the side surfaces on the other side in the axial direction of the peripheral portions are less likely to interfere with the side surface on the one side in the axial direction of the first rotating member 2, specifically, the side surface on the one side in the axial direction of the first base portion 8.

The width in the circumferential direction of portions in between the pair of the first elastic pieces 38 that are circumferentially connected by the first connecting portion 37 is smaller than the width in the circumferential direction of each of the first recess portions 14 of the coupling 4.

The first elastic pieces 38 may respectively have a first elastic protrusion 42 that protrudes in the circumferential direction at a portion in the radial direction on a side surface in the circumferential direction that faces an outer side surface in the circumferential direction of each of the first projection portions 7. In the present example, in order to enable the first elastic protrusion 42 to be in stable contact with the outer side surface in the circumferential direction of each of the first projection portions 7 even when the torque to be transmitted changes, the first elastic protrusion 42 is provided on a portion of the side surface on the inner side from the center portion in the radial direction, more specifically, the portion is located on the inner side of the first elastic inclined surfaces 88 in the radial direction.

In this case, the width in the circumferential direction of portions between the pair of the first elastic pieces 38 that are circumferentially connected by the first connecting portions 37 is defined by the width in the circumferential direction of portions between tip end surfaces of a pair of the first elastic protrusions 42 facing each other in the circumferential direction. In the present example, the width in the circumferential direction of portions that are radially offset from the first elastic protrusions 42 of the pair of the first elastic pieces 38 that are circumferentially connected by the first connecting portions 37, is also smaller than the width in the circumferential direction of each of the first recess portions 14 of the coupling 4. The shape of the first elastic protrusions 42 is a convex arc shape when viewed from the axial direction.

The shape and formation positions of the first elastic protrusion 42 are not limited to the illustrated structure. For example, as a shape of the first elastic protrusion when viewed from the axial direction, other shapes such as a triangle or a trapezoid can be employed. The number of the first elastic protrusion is not limited to one, and may be plural. It is also possible to omit the first elastic protrusion, and the side surface in the circumferential direction that faces the outer side surface in the circumferential direction of each of the first projection portions may be entirely formed of a flat portion.

The first elastic body 5 is supported at an end portion on the other side in the axial direction of the coupling 4 by externally fitting the first supported portions 36 to the first support portions 19 respectively without any looseness in the circumferential direction and the radial direction.

Furthermore, in this state, the first nail portions 26 engage with the first supported portions 36 from the other side in the axial direction. Specifically, the first outer side nail portions 27 engage with the first outer side engaging pieces 39 of the first supported portions 36 from the other side in the axial direction. The first inner side nail portions 28 enter the inside of the notches 41 of the first inner side engaging pieces 40 and engage with portions of the first inner side engaging pieces 40 adjacent to the one side in the axial direction of the notches 41 from the other side in the axial direction.

In the structure of the present example, since the first outer side nail portions 27 and the first inner side nail portions 28 engage with the first supported portions 36 from the other side in the axial direction, it is possible to effectively prevent the first supported portions 36 from slipping out from the periphery of the first support portions 19 to the other side in the axial direction, that is, to prevent the first elastic body 5 from falling off from the first support portions 19 in the axial direction.

In particular, in the first elastic body 5, each of the first connecting portions 37 circumferentially connects the outer end portions in the radial direction of the pair of the first supported portions 36 that are adjacent to each other in the circumferential direction. As a result, the outer end portion in the radial direction of the first elastic body 5 is formed in a ring shape whose entire circumference is connected, and has higher rigidity than the inner end portions in the radial direction of the first elastic body 5. Furthermore, the circumferential length of each of the first outer side nail portions 27 of the outer end portion in the radial direction which engage with the first outer side engaging pieces 39 from the other side in the axial direction is greater than the circumferential length of each of the first inner side nail portions 28. Therefore, based on the engagement between the first outer side engaging pieces 39 and the first outer side nail portions 27, the first supported portions 36 can be more effectively prevented from slipping out from the periphery of the first support portions 19 to the other side in the axial direction.

The first projection portions 7 of the first rotating member 2 are respectively inserted into portions in between the pair of the first elastic pieces 38 of the first elastic body 5 that are circumferentially connected by the first connecting portions 37. That is, the first elastic pieces 38 of the first elastic body 5 are respectively held in the circumferential direction between the first projection portions 7 and the first support portions 19. In the present example, in this state, side surfaces in the circumferential direction of the pair of the first elastic pieces 38 that are adjacent to each other in the circumferential direction abut against a pair of outer side surfaces in the circumferential direction of each of the first projection portions 7 with an interference. Therefore, the effect of preventing rattling of the first rotating member 2 with respect to the coupling 4 can be obtained.

In particular, in the present example, since the first elastic pieces 38 are provided with the first elastic protrusions 42 that abut against the outer side surfaces in the circumferential direction of the first projection portions 7 with an interference, the effect of preventing rattling is more effectively exerted.

The outer side surfaces in the radial direction of the first projection portions 7 may be in contact with or not in contact with the inner side surfaces in the radial direction of the first connecting portions 37.

As illustrated in FIG. 14A, FIG. 14B, FIG. 15A, and FIG. 15B, the second elastic body 6 has second supported portions 43 arranged at a plurality of locations in the circumferential direction (four locations in the illustrated example) and respectively having an annular shape, and second connecting portions 44 each circumferentially connecting outer end portions or inner end portions in the radial direction (in the present example, the radial outer end portions) a pair of the second supported portions 43 that are adjacent to each other in the circumferential direction. The second supported portions 43 are externally fitted to the second projection portions 10 of the second rotating member 3. The second elastic pieces 45, which are portions of the second supported portions 43 located in between the second projection portions 10 and the second support portions 20 that are adjacent to each other in the circumferential direction, are held in the circumferential direction therebetween.

In the present example, the second elastic body 6 has the same specifications as the first elastic body 5, that is, the same shape, size, and material.

Each of the second supported portions 43 of the second elastic body 6 comprises a pair of the second elastic pieces 45 that are adjacent to each other in the circumferential direction, a second outer side engaging piece 46, and a second inner side engaging piece 47. Instead of circumferentially connecting the outer end portions in the radial direction of the pair of the second elastic pieces that are adjacent to each other in the circumferential direction by the second connecting portions, it is also possible to circumferentially connect the inner end portions in the radial direction of the pair of the second elastic pieces by the second connecting portions.

Each of the second inner side engaging pieces 47 has a notch 48 in a middle portion in the circumferential direction of a half portion on the one side in the axial direction, which is open to the outer side in the radial direction and the one side in the axial direction.

The second elastic body 6 is provided with peripheral portions respectively arranged around the second projection portions 10, specifically, the peripheral portions respectively comprising the second connecting portion 44 and the pair of the second elastic pieces 45 that are connected by the second connecting portion, The inner side portions in the radial direction of the side surface on the one side in the axial direction of the peripheral portions are formed of second elastic flat surfaces 89 perpendicular to the axial direction of the second elastic body 6, and the outer side portions in the radial direction of the side surfaces on the one side in the axial direction of the peripheral portions are formed of second elastic inclined surfaces 90 that are inclined toward the other side in the axial direction as going to the outer side in the radial direction.

The width in the circumferential direction of portions in between the pair of the second elastic pieces 45 that are circumferentially connected by the second connecting portions 44 is smaller than the width in the circumferential direction of each of the second recess portions 15 of the coupling 4.

The second elastic pieces 45 respectively have a second elastic protrusion 49 that protrudes in the circumferential direction at a portions in the radial direction on a side surface in the circumferential direction that faces an outer side surface in the circumferential direction of each of the second projection portions 10.

The second elastic body 6 is the same as the first elastic body 5 in other respects as well.

The second elastic body 6 is supported at an end portion on the one side in the axial direction of the coupling 4 by externally fitting the second supported portions 43 to the second support portions 20 respectively without any looseness in the circumferential direction and the radial direction.

Furthermore, in this state, the second nail portions 29 engage with the second supported portions 43 from the one side in the axial direction. Specifically, the second outer side nail portion 30 engage with the second outer side engaging pieces 46 of the second supported portions 43 from the one side in the axial direction. The second inner side nail portions 31 enter the inside of the notches 48 of the second inner side engaging pieces 47 and engage with portions of the second inner side engaging pieces 47 adjacent to the other side in the axial direction of the notches 48 from the one side in the axial direction.

In the structure of the present example, since the second outer side nail portions 30 and the second inner side nail portions 31 engage with the second supported portions 43 from the one side in the axial direction, it is possible to effectively prevent the second supported portions 43 from slipping out from the periphery of the second support portions 20 to the one side in the axial direction, that is, to prevent the second elastic body 6 from falling off from the second support portions 20 in the axial direction.

**In** particular, in the second elastic body 6, each of the second connecting portions 44 circumferentially connects the outer end portions in the radial direction of a pair of the second supported portions 43 that are adjacent to each other in the circumferential direction. As a result, the outer end portion in the radial direction of the second elastic body 6 is formed in a ring shape whose entire circumference is connected, and has higher rigidity than the inner end portions in the radial direction of the second elastic body 6. Furthermore, the circumferential length of each of the second outer side nail portions 30 which are formed of the outer end portion in the radial direction and engage with the second outer side engaging pieces 46 from the one side in the axial direction is greater than the circumferential length of each of the second inner side nail portions 31. Therefore, based on the engagement between the second outer side engaging pieces 46 and the second outer side nail portions 30, the second supported portions 43 can be more effectively prevented from slipping out from the periphery of the second support portions 20 to the one side in the axial direction.

The second projection portions 10 of the second rotating member 3 are respectively inserted into portions in between the pair of the second elastic pieces 45 of the second elastic body 6 that are circumferentially connected by the second connecting portions 44. That is, the second elastic pieces 45 of the second elastic body 6 are respectively held in the circumferential direction between the second projection portions 10 and the second support portions 20 respectively. In the present example, in this state, side surfaces in the circumferential direction of the pair of the second elastic pieces 45 that are adjacent to each other in the circumferential direction abut against a pair of outer side surfaces in the circumferential direction of each of the second projection portions 10 with an interference. Therefore, the effect of preventing rattling of the second rotating member 3 with respect to the coupling 4 can be obtained.

In particular, in the present example, since the second elastic pieces 45 are provided with the second elastic protrusions 49 that abut against the outer side surfaces in the circumferential direction of the second projection portions 10 with an interference, the effect of preventing rattling is more effectively exerted.

The outer side surfaces in the radial direction of the second projection portions 10 may be in contact with or not in contact with the inner side surfaces in the radial direction of the second connecting portions 44.

When the torque transmitted between a pair of rotating members connected by the torque transmission joint 1 of the present example is relatively small, that is, when the torque transmitted between one of the rotating members to which the first rotating member 2 is externally fitted and fixed to an end portion in the axial direction (in the present example, the output shaft 64 of the electric motor 62) and the other rotating member to which the second rotating member 3 is externally fitted and fixed to an end portion in the axial direction (in the present example, the worm 67) is relatively small, the outer side surfaces in the circumferential direction of the first projection portions 7 of the first rotating member 2 press the outer side surfaces in the circumferential direction of the first support portions 19 of the coupling 4 through the first elastic pieces 38 of the first elastic body 5 as one of the rotating members rotates.

As the coupling 4 rotates, the outer side surfaces in the circumferential direction of the second support portions 20 of the coupling 4 press the outer side surfaces in the circumferential direction of the second projection portions 10 of the second rotating member 3 through the second elastic pieces 45 of the second elastic body 6. In this manner, the rotational torque of one rotating member is transmitted to the other rotating member.

On the other hand, when the torque transmitted between the one rotating member and the other rotating member becomes larger, the first elastic pieces 38 of the first elastic body 5 are elastically compressed in the circumferential direction between the outer side surfaces in the circumferential direction of the first support portions 19 of the coupling 4 and the outer side surfaces in the circumferential direction of the first projection portions 7 of the first rotating member 2, and the second elastic pieces 45 of the second elastic body 6 are elastically compressed in the circumferential direction between the outer side surfaces in the circumferential direction of the second support portions 20 of the coupling 4 and the outer side surfaces in the circumferential direction of the second projection portions 10 of the second rotating member 3.

Then, the outer side surfaces in the circumferential direction of the first projection portions 7 of the first rotating member 2 directly abut against inner side surfaces in the circumferential direction of the first recess portions 14 of the coupling 4, and the outer side surfaces in the circumferential direction of the second projection portions 10 of the second rotating member 3 directly abut against inner side surfaces in the circumferential direction of the second recess portions 15 of the coupling 4.

Since the impact of these contacts is weakened by the first elastic body 5 and the second elastic body 6, it is possible to prevent unpleasant noise such as chattering from being generated at the abutting portions where the outer side surfaces in the circumferential direction of the first projection portions 7 abuts against the inner side surfaces in the circumferential direction of the first recess portions 14, and where the outer side surfaces in the circumferential direction of the second projection portions 10 abut against the inner side surfaces in the circumferential direction of the second recess portions 15.

In this state, most of the rotational torque of the one rotating member is transmitted from the abutting portion between the outer side surfaces in the circumferential direction of the first projection portions 7 and the inner side surfaces in the circumferential direction of the first recess portions 14 to the coupling 4, and most of the rotational torque transmitted to the coupling 4 is transmitted from the abutting portion between the outer side surfaces in the circumferential direction of the second projection portions 10 and the inner side surfaces in the circumferential direction of the second recess portions 15 to the other rotating member.

In the torque transmission joint 1 of in the present example, even if misalignment occurs between the central axes of the one rotating member and the other rotating member, that is, if the central axis of the one rotating member and the central axis of the other rotating member become misaligned due to being tilted or eccentric with respect to each other, the coupling 4 can elastically deform the first elastic body 5 and/or the second elastic body 6 while tilting with respect to the central axis of the one rotating member and/or the central axis of the other rotating member, thereby enabling smooth torque transmission between the one rotating member and the other rotating member.

In a case of implementing a structure of the present disclosure, the rigidity of the first elastic body and the second elastic body can be made different from each other, and circumferential gaps between the first projection portions and the first recess portions and the second projection portions and the second recess portions can also be made different from each other. In this case, a magnitude of the transmission torque between the outer side surfaces in the circumferential direction of the first projection portions and the inner side surfaces in the circumferential direction of the first recess portions and a magnitude of the transmission torque between the outer side surfaces in the circumferential direction of the second projection portions and the inner side surfaces in the circumferential direction of the second recess portions can be made different from each other. As a result, torque transmission characteristics between one rotating member and the other rotating member can be divided into multiple stages, making it possible to smoothly operate various kinds of mechanical devices, for example, is it possible to improve the steering feel of the steering wheel (see FIG. 1).

In the torque transmission joint 1 of in the present example, when the first elastic body 5 is assembled to the other side portion in the axial direction of the coupling 4, that is, when externally fitting the annular first supported portions 36 of the first elastic body 5 to the first support portions 19 of the coupling 4, it is necessary to elastically widen the distance between the first outer side engaging pieces 39 and the first inner side engaging pieces 40 of the first supported portions 36 so that the first nail portions 26 located at end portions on the other side in the axial direction of the first support portions 19 can pass between the first outer side engaging pieces 39 and the first inner side engaging pieces 40 in the axial direction.

In this regard, in the present example, the side surfaces on the other side in the axial direction of the first nail portions 26 (the first outer side nail portions 27 and the first inner side nail portions 28) are formed of inclined guide surfaces 32, 33 that are inclined in a direction such that the axial width of the first nail portions 26 becomes smaller as going to the tip end side in the radial direction. As a result, when the first supported portions 36 are pressed around the first support portions 19 from the other side in the axial direction, the first outer side engaging pieces 39 and the first inner side engaging pieces 40 of the first supported portions 36 elastically deform in a direction widening the distance between them along the inclined guide surfaces 32, 33 of the first nail portions 26. Then, the first nail portions 26 pass between the first outer side engaging pieces 39 and the first inner side engaging pieces 40 in the axial direction.

After passing through, the distance between the first outer side engaging pieces 39 and the first inner side engaging pieces 40 elastically returns to its original state, and the first supported portions 36 are externally fitted to the first support portions 19. **In** this way, in the present example, by utilizing the inclined guide surfaces 32, 33 of the first nail portions 26, it is possible to easily perform the work of externally fitting the first supported portions 36 to the first support portions 19, that is, the work of assembling the first elastic body 5 to the other side portion in the axial direction of the coupling 4. However, alternatively, the side surfaces on the other side in the axial direction of the first nail portions can also be formed of flat surfaces perpendicular to the axial direction of the coupling.

Furthermore, in the present example, the side surface on the one side in the axial direction of the second nail portions 29 of the coupling 4 (the second outer side nail portions 30 and the second inner side nail portions 31) are formed of inclined guide surfaces 34, 35 that are inclined in a direction such that the axial width of the second nail portions 29 becomes smaller as going to the tip end side in the radial direction. Therefore, for the same reason, by utilizing the inclined guide surfaces 34, 35 of the second nail portions 29, it is possible to easily perform the work of externally fitting the second supported portions 43 to the second support portions 20, that is, the work of assembling the second elastic body 6 to the one side portion in the axial direction of the coupling 4. However, similarly, the side surfaces on the one side in the axial direction of the second nail portions can also be formed of flat surfaces perpendicular to the axial direction of the coupling.

In a case of implementing a structure of the present disclosure, in the coupling, a structure can be adopted in which first circumferential nail portions protruding in the circumferential direction are provided on at least one of both sides in the circumferential direction of the end portions on the other side in the axial direction of the first support portions, and second circumferential nail portions protruding in the circumferential direction are provided on at least one of both sides in the circumferential direction of the end portions on the one side in the axial direction of the second support portions. Then, by engaging the first circumferential nail portions with the first elastic body, the first elastic body can be prevented from falling off in the axial direction from the first support portions, and by engaging the second circumferential nail portions with the second elastic body, the second elastic body can be prevented from falling off in the axial direction from the second support portions.

### (2) Method for Assembling Torque Transmission Joint

The method for assembling the torque transmission joint 1 of the present example includes a step of assembling the first elastic body 5 to the other side portion in the axial direction of the coupling 4 with the second flat surfaces 24 of the second support portions 20 of the coupling 4 abutting against an upper surface of a support base, and a step of assembling the second elastic body 6 to the one side portion in the axial direction of the coupling 4 with the first flat surfaces 22 of the first support portions 19 of the coupling 4 abutting against the upper surface of the support base 50.

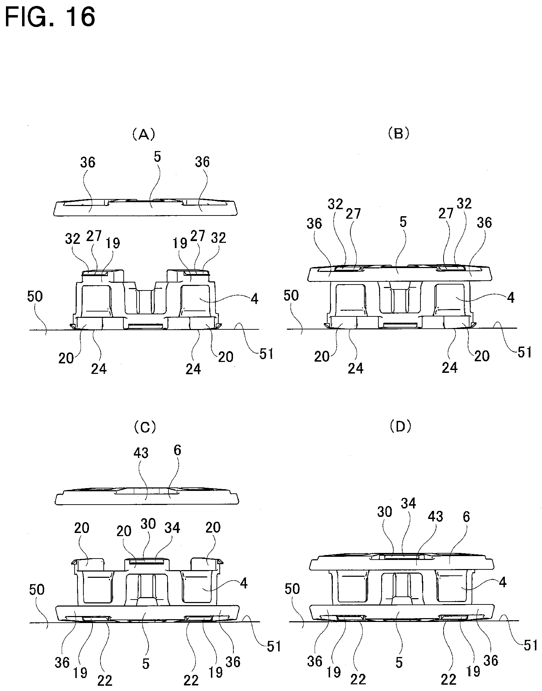

Specifically, in the present example, first, as illustrated in FIG. 16A, the second flat surfaces 24 of the second support portions 20 of the coupling 4 are abutted against an upper surface 51 of a support base 50 which is a horizontal surface. Then, in this state, the first elastic body 5 is assembled to the other side portion in the axial direction of the coupling 4 as illustrated in the order of FIG. 16A to FIG. 16B. That is, the first supported portions 36 of the first elastic body 5 are pressed downwardly from above and externally fitted around the first support portions 19 of the coupling 4 respectively.

As described above, this external fitting operation can be easily performed by utilizing the inclined guide surfaces 32, 33 of the first nail portions 26. Furthermore, in the present example, the external fitting operation can be performed with the second flat surfaces 24 of the second support portions 20 of the coupling 4 abutting against the upper surface 51 of the support base 50, that is, with the posture of the coupling 4 stabilized. Therefore, in this respect as well, the external fitting operation can be easily performed.

In the present example, next, as illustrated in the order of FIG. 16B to FIG. 16C, combined coupling 4 and the first elastic body 5 are turned upside down, and the first flat surfaces 22 of the first support portions 19 of the coupling 4 are abutted against the upper surface 51 of the support base 50. Then, in this state, as illustrated in the order of FIG. 16C to FIG. 16D, the second elastic body 6 is assembled to the one side portion in the axial direction of the coupling 4. That is, the second supported portions 43 of the second elastic body 6 are pressed downwardly from above and externally fitted around the second support portions 20 of the coupling 4 respectively.

As described above, this external fitting operation can be easily performed by utilizing the inclined guide surfaces 34, 35 of the second nail portions 29. Furthermore, in the present example, the external fitting operation can be performed with each of the first flat surfaces 22 of the first support portions 19 of the coupling 4 abutting against the upper surface 51 of the support base 50, that is, with the posture of the coupling 4 stabilized. Therefore, in this respect as well, the external fitting operation can be easily performed.

The order of the step of assembling the first elastic body 5 to the other side portion in the axial direction of the coupling 4 and the step of assembling the second elastic body 6 to the one side portion in the axial direction of the coupling 4 can be reversed from that in the present example.

In the present example, after that, a step is performed in which the first projection portions 7 of the first rotating member 2 are respectively inserted into portions in between a pair of the first elastic pieces 38 that are circumferentially connected by the first connecting portions 37 of the first elastic body 5, and into the first recess portions 14 of the coupling 4, and a step is performed in which the second projection portions 10 of the second rotating member 3 are respectively inserted into portions in between a pair of the second elastic pieces 45 that are circumferentially connected by the second connecting portions 44 of the second elastic body 6, and into the second recess portions 15 of the coupling 4. The order of these steps can be determined appropriately.

### (3) Electric Power Steering Device

As illustrated in FIG. 1, the electric power steering device 52 of the present example includes a steering wheel 53, a steering shaft 54, a steering column 55, a pair of universal joints 56a, 56b, an intermediate shaft 57, a steering gear unit 58, and an electric motor 59 with worm reducer to which the torque transmission joint 1 of the present example is applied.

The steering wheel 53 is supported and fixed to a rear end portion of the steering shaft 54. The steering shaft 54 is rotatably supported inside the steering column 55 supported on the vehicle body. A front end portion of the steering shaft 54 is connected to a pinion shaft 60 of the steering gear unit 58 through the rear universal joint 56a, the intermediate shaft 57, and the front universal joint 56b.

Therefore, when the driver rotates the steering wheel 53, the rotation of the steering wheel 53 is transmitted to the pinion shaft 60 through the steering shaft 54, the pair of universal joints 56a, 56b, and the intermediate shaft 57. The rotation of the pinion shaft 60 is converted into linear motion of a rack shaft (not illustrated) of the steering gear unit 58 that engages with the pinion shaft 60. As a result, a pair of tie rods 61 are pushed and pulled, and a steering angle corresponding to the amount of rotation of the steering wheel 2 is applied to the left and right steered wheels.

The electric power steering device 52 of the present example can reduce the force required for the driver to operate the steering wheel 53 by applying power from the electric motor 59 with worm reducer to the steering shaft 54.

### (4) Electric Motor with Worm Reducer

The electric motor 59 with worm reducer includes an electric motor 62, a worm reducer 63, and a torque transmission joint 1.

The electric motor 62 has an output shaft 64. The electric motor 62 rotationally drives the output shaft 64 in both directions when energized.

The worm reducer 63 includes a housing 65, a worm wheel 66, and a worm 67.

The housing 65 includes a wheel accommodating portion 68 and a worm accommodating portion 69 having a central axis that is arranged in a skewed position with respect to the central axis of the wheel accommodating portion 68 and having an axial middle portion that opens to the wheel accommodating portion 68.

The wheel accommodating portion 68 is supported and fixed to the front end portion of the steering column 55 so that its central axis is coaxial with the central axis of the steering column 55.

The worm accommodating portion 69 has a cylindrical shape and has opening portions at both end portions in the axial direction. The opening portion on the one side in the axial direction (the left side in FIG. 2) of the worm accommodating portion 69 is closed by a cover 70. The opening portion on the other side in the axial direction (the right side in FIG. 2) of the worm accommodating portion 69 is closed by an electric motor 62 connected and fixed to the housing 65.

Regarding the worm accommodating portion 69 and each member accommodated in the worm accommodating portion 69, the one side in the axial direction is the left side in FIG. 2, and the other side in the axial direction is the right side in FIG. 2.

The worm accommodating portion 69 has a cylindrical surface portion 71 on the inner circumferential surface of a portion on the other side in the axial direction, and has a stepped portion 72 facing the other side in the axial direction at an end portion on the one side in the axial direction of the cylindrical surface portion 71.

The worm wheel 66 has wheel teeth 73 on the outer circumferential surface, and is supported inside the wheel accommodating portion 68 so as to be able to rotate freely. In the present example, the worm wheel 66 is supported and fixed around the front end portion of the steering shaft 54 rotatably supported inside the wheel accommodating portion 68, so as to rotate integrally with the steering shaft 54. The worm wheel 66 of the present example is formed by connecting and fixing a gear portion 75 made of synthetic resin and having wheel teeth 73 on the outer circumferential surface around an annular-plate-shaped core portion 74 made of metal.

The worm 67 has threaded worm teeth 76 on the outer circumferential surface of an axial middle portion thereof, which mesh with the wheel teeth 73 of the worm wheel 66, and is supported inside the worm accommodating portion 69 so as to be able to rotate freely.

That is, the worm 67 includes a fitting cylindrical portion 77 at a portion on the other side in the axial direction of the worm teeth 76, and the fitting cylindrical portion 77 is supported by a ball bearing 78 into the cylindrical surface portion 71 of the worm accommodating portion 69 so as to be able to rotate freely. The outer ring 79 of the ball bearing 78 is pressure fitted and fixed inside the cylindrical surface portion 71 with a side surface on the one side in the axial direction thereof abutting against the stepped portion 72. An inner ring 80 of the ball bearing 78 is externally fitted to the fitting cylindrical portion 77 with a clearance fit. Furthermore, the inner ring 80 is held from both sides in the axial direction through a pair of worm dampers 82 between a flange portion 81 provided on a portion of the worm 67 adjacent to the other side in the axial direction of the worm teeth 76 and the second rotating member 3 of the torque transmission joint 1 which is externally fitted and fixed to the other end portion in the axial direction of the worm 67.

As a result, the fitting cylindrical portion 77 of the worm 67 is supported into the cylindrical surface portion 71 of the worm accommodating portion 69 so as to be capable of rotation and pivotal displacement.

The structure for supporting the portion of the worm 67 located on the other side in the axial direction of the worm teeth 76 with respect to the worm accommodating portion 69 so as to be capable of rotation and pivotal displacement is not limited to the structure of the present example, and various structures can be adopted.

The end portion on the one side in the axial direction of the worm 67 is supported by the ball bearing 83 into the inner circumferential surface of the worm accommodating portion 69 so as to be able to rotate freely. A biasing mechanism 84 including elastic bodies such as a coil spring or a leaf spring is provided between the outer circumferential surface of the ball bearing 83 and the inner circumferential surface of the worm accommodating portion 69. The biasing mechanism 84 elastically biases the worm teeth 76 of the worm 67 toward the wheel teeth 73 of the worm wheel 66. With this kind of construction, backlash that occurs between the worm teeth 76 and the wheel teeth 73 is suppressed, and the occurrence of chattering is suppressed.

The mechanism for elastically biasing the end portion on the one side in the axial direction of the worm 67 toward the worm wheel 6 is not limited to the structure of the present example, and various structures can be adopted.

The torque transmission joint 1 connects an end portion on the one side in the axial direction of the output shaft 64 of the electric motor 62 and an end portion on the other side in the axial direction of the worm 67 so as to be able to transmit torque. For this purpose, the first rotating member 2 of the torque transmission joint 1 is externally fitted and fixed to the end portion on the one side in the axial direction of the output shaft 64 of the electric motor 62, and the second rotating member 3 of the torque transmission joint 1 is externally fitted and fixed to the end portion on the other side in the axial direction of the worm 67.

Therefore, in the electric motor 59 with worm reducer of the present example, even if the worm 67 oscillates or becomes eccentric relative to the output shaft 64 of the electric motor 62 during operation, in the torque transmission joint 1, the coupling 4 elastically deforms the first elastic body 5 and/or the second elastic body 6 while tilting relative to the central axis of the output shaft 64 of the electric motor 62 and/or the central axis of the worm 67, thereby enabling smooth torque transmission between the output shaft 64 of the electric motor 62 and the worm 67.

The electric motor 59 with worm reducer of the present example is arranged in a position where it applies power to the steering shaft 54. However, the structure of the present disclosure can also be applied to an electric motor with a worm reducer arranged in a position where it applies power to the pinion shaft or rack shaft of the steering gear unit.

### [Second Example]

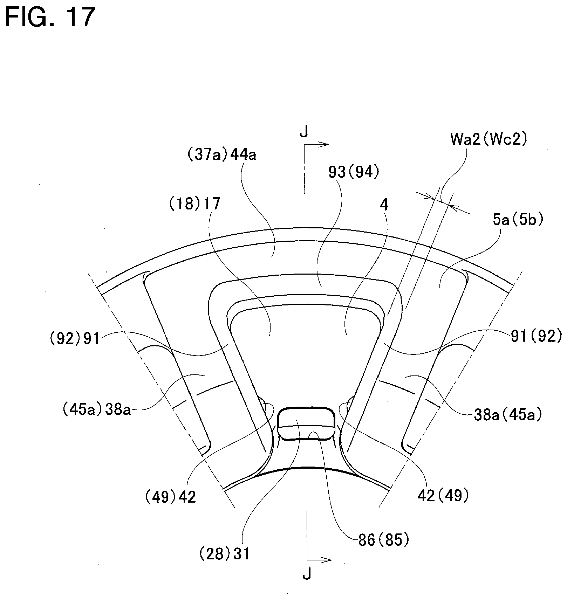

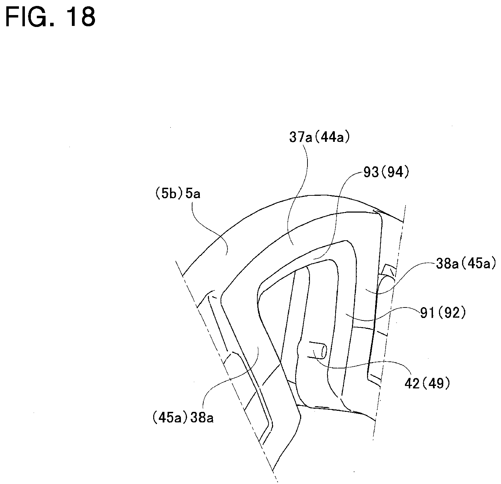

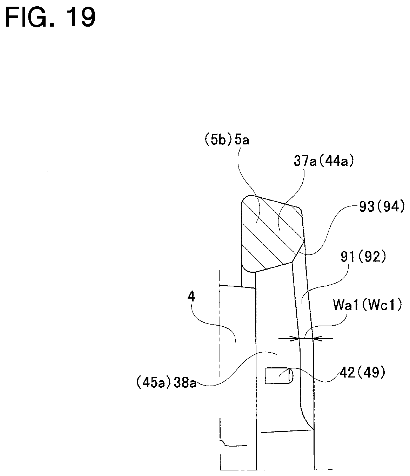

A second example of an embodiment of the present disclosure will be described with reference to FIG. 17 to FIG. 21.

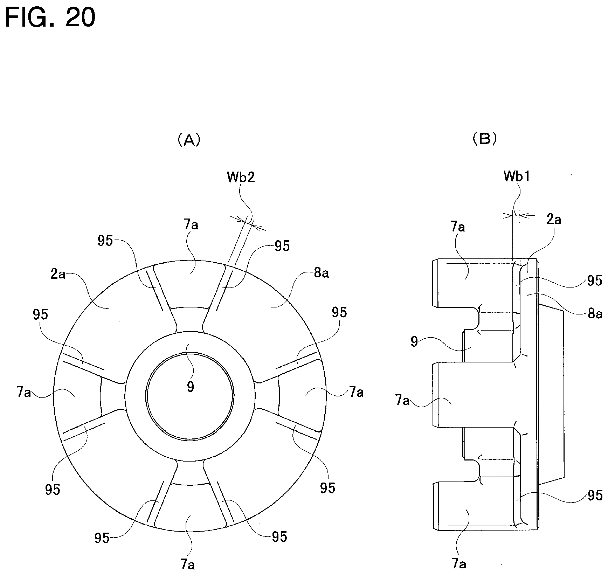

In a joint for torque transmission of the worm reducer of the present example, as illustrated in FIG. 17 to FIG. 19, the first elastic body 5a has first chamfered portions 91 at connecting portions between side surfaces on the other side in the axial direction of the first elastic pieces 38a and side surfaces in the circumferential direction of the first elastic pieces 38a that face the outer side surfaces in the circumferential direction of the first projection portions 7a of the first rotating member 2a (see FIG. 20A and FIG. 20B). In the present example, the first chamfered portions 91 are formed of C-chamfered portions. However, alternatively, the first chamfered portions can also be formed of R-chamfered portions.

In the present example, the first elastic body 5a has first connecting chamfered portions 93 at connecting portions between side surfaces on the other side in the axial direction and inner side surfaces in the radial direction of the first connecting portions 37a. Both end portions in the circumferential direction of each of the first connecting chamfered portion 93 are connected to end portions on the outer side in the radial direction of a pair of first chamfered portions 91 that are circumferentially adjacent to each other with the first connection chamfered portion 93 in between. In the present example, the first connecting chamfered portions 93 are formed of C-chamfered portions. However, alternatively, the first connecting chamfered portions can also be formed of R-chamfered portions. Furthermore, in a case that the first connecting portions are provided, the first connecting chamfered portions can also be omitted.

In the present example, when inserting the first projection portions 7a of the first rotating member 2a into portions in between a pair of the first elastic pieces 38a of the first elastic body 5a that are circumferentially connected by the first connecting portions 37a in order to assemble the joint for torque transmission, the first chamfered portions 91 and the first connecting chamfered portions 93 can be used as guide surfaces to facilitate the insertion operation.

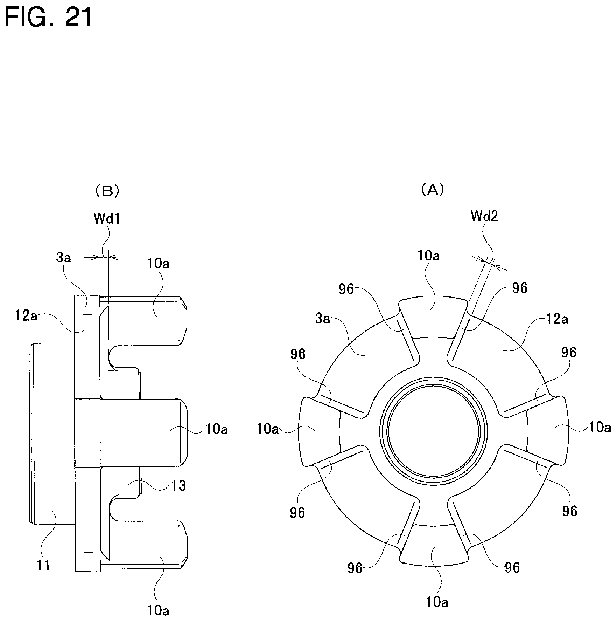

In the present example, as illustrated in FIG. 17 to FIG. 19, the second elastic body 6a has second chamfered portions 92 at connecting portions between side surfaces on the one side in the axial direction of the second elastic piece 45a and side surfaces in the circumferential direction that face outer side surfaces in the circumferential direction of the second projection portions 10a of the second rotating member 3a (see FIG. 21A and FIG. 21B). In the present example, the second chamfered portions 92 are formed of C-chamfered portions. However, alternatively, the second chamfered portions can also be formed of R-chamfered portions.

In the present example, the second elastic body 6a has second connecting chamfered portions 94 at connecting portions between side surfaces on the one side in the axial direction and inner side surface in the radial direction of the second connecting portions 44a. Both end portions in the circumferential direction of each of the second connecting chamfered portion 94 are connected to end portion on the outer side in the radial direction of a pair of second chamfered portions 92 that are circumferentially adjacent to each other with the second connecting chamfered portion 94 in between. In the present example, the second connecting chamfered portions 94 are formed of C-chamfered portions. However, alternatively, the second connecting chamfered portions can also be formed of R-chamfered portions. Furthermore, in a case that the second connecting portions are provided, the second connecting chamfered portions can also be omitted.

In the present example, when inserting the second projection portions 10a of the second rotating member 3a into portions in between a pair of the second elastic pieces 45a of the second elastic body 6a that are circumferentially connected by the second connecting portions 44a in order to assemble the joint for torque transmission, the second chamfered portions 92 and the second connecting chamfered portions 94 can be used as guide surfaces to facilitate the insertion operation.

In the present example, as illustrated in FIG. 20A and FIG. 20B, the first rotating member 2a has first corner portions 95 at connecting portions between side surfaces on both sides in the circumferential direction of the first projection portions 7a and a side surface on the one side in the axial direction of the first base portion 8a, each of the first corner portions 95 being inclined in a direction away from the center portion of the first projection portions 7a in the circumferential direction as going to the other side in the axial direction. As a result, when torque is transmitted by the joint for torque transmission, stress concentration at the connecting portions between side surfaces on both sides in the circumferential direction of the first projection portions 7a and the side surface on the one side in the axial direction of the first base portion 8a is mitigated.

In the present example, the first corner portions 95 are formed of flat surfaces that are linearly inclined with respect to the axial direction. However, alternatively, the first corner portions can also be formed of curved surfaces that are curvedly inclined with respect to the axial direction, that is, corner R portions.

In the present example, the first elastic body 5a has the first chamfered portions 91 at connecting portions between the side surfaces on the other side in the axial direction of the first elastic pieces 38a and the side surfaces in the circumferential direction that face the outer side surfaces in the circumferential direction of the first projection portions 7a of the first rotating member 2a. Therefore, when the side surface on the one side in the axial direction of the first base portion 8a of the first rotating member 2a abuts against the side surface on the other side in the axial direction of the first elastic body 5a in a state where the electric motor with worm reducer is assembled, the connecting portions (the first chamfered portions 91) of the first elastic pieces 38a can be suppressed or prevented from being elastically compressed by the first corner portions 95.

As a result, the smoothness of the relative tilt that occurs between the first rotating member 2a and the coupling 4 is improved, thereby improving the ability of the joint for torque transmission to absorb misalignment between the output shaft of the electric motor and the worm.

**In** the present example, the axial width dimension Wa1 of each of the first chamfered portions 91 of the first elastic body 5a is greater than or equal to the axial width dimension Wb1 of each of the first corner portions 95 of the first rotating member 2a (Wa1≥Wb1), and the circumferential width dimension Wa2 of each of the first chamfered portions 91 is greater than or equal to the circumferential width dimension Wb2 of each of the first corner portions 95 (Wa2≥Wb2). Therefore, when the side surface on the one side in the axial direction of the first base portion 8a of the first rotating member 2a abuts against the side surface on the other side in the axial direction of the first elastic body 5a, the connecting portions (the first chamfered portions 91) can be more effectively suppressed or prevented from being elastically compressed by the first corner portions 95.

In the present example, as illustrated in FIG. 21A and FIG. 21B, the second rotating member 3a has second corner portions 96 at connecting portions between side surfaces on both sides in the circumferential direction of the second projection portions 10a and a side surface on the other side in the axial direction of the second base portion 12a, each of the second corner portions 96 being inclined in a direction away from the center portion of the second projection portions 10a in the circumferential direction as going to the one side in the axial direction. As a result, when torque is transmitted by the joint for torque transmission, stress concentration at the connecting portions between the side surfaces on both sides in the circumferential direction of the second projection portions 10a and the side surface on the other side in the axial direction of the second base portion 12 is mitigated.

In the present example, the second corner portions 96 are formed of flat surfaces that are linearly inclined with respect to the axial direction. However, alternatively, the second corner portions can also be formed of curved surfaces that are curvedly inclined with respect to the axial direction, that is, corner R portions.

In the present example, the second elastic body 6a has the second chamfered portions 92 at connecting portions between the side surfaces on the one side in the axial direction of the second elastic pieces 45a and the side surfaces in the circumferential direction that face the outer side surfaces in the circumferential direction of the second projection portions 10a of the second rotating member 3a. Therefore, when the side surface on the other side in the axial direction of the second base portion 12a of the second rotating member 3a abuts against the side surface on the one side in the axial direction of the second elastic body 6a in a state where the worm reducer including joint for torque transmission is assembled, the connecting portions (the second chamfered portions 92) of second elastic pieces 45a can be suppressed or prevented from being elastically compressed by the second corner portions 96.

As a result, the smoothness of the relative tilt that occurs between the second rotating member 3a and the coupling 4 is improved, thereby improving the ability of the joint for torque transmission to absorb misalignment between the output shaft of the electric motor and the worm.

In the present example, the axial width dimension Wc1 of each of the second chamfered portions 92 of the second elastic body 6a is greater than or equal to the axial width dimension Wd1 of each of the second corner portions 96 of the second rotating member 3a (Wc1≥Wd1), and the circumferential width dimension Wc2 of each of the second chamfered portions 92 is greater than or equal to the circumferential width dimension Wd2 of each of the second corner portions 96 (Wc2≥Wd2). Therefore, when the side surface on the other side in the axial direction of the second base portion 12a of the second rotating member 3a abuts against the side surface on the one side in the axial direction of the second elastic body 6a, the connecting portions (the second chamfered portions 92) can be more effectively suppressed or prevented from being elastically compressed by the second corner portions 96.

Other configuration and operational effects of the second example are the same as those of the first example.

In a case of implementing the electric motor with worm reducer of the present disclosure, the first rotating member of the torque transmission joint can be formed integrally with one of the rotating members such as the output shaft of the electric motor, and the second rotating member of the torque transmission joint can be formed integrally with the other rotating member such as the worm.

The electric motor with worm reducer of the present disclosure can be incorporated not only in an electric power steering device but also in various kinds of mechanical devices.

### REFERENCE SIGNS LIST

1 Torque transmission joint
2, 2a First rotating member
3, 3a Second rotating member
4 Coupling
5, 5a First elastic body
6, 6a Second elastic body
7, 7a First projection portion
8, 8a First base portion
9 Protruding portion
10, 10a Second projection portion
11 Protruding portion
12, 12a Second base portion
13 Protruding portion
14 First recess portion
15 Second recess portion
16 Arm portion
17 First side plate portion
18 Second side plate portion
19 First support portion
20 Second support portion
21 Boss portion
22 First flat surface
23 First inclined surface
24 Second flat surface
25 Second inclined surface
26 First nail portion
27 First outer side nail portion
28 First inner side nail portion
29 Second nail portion
30 Second outer side nail portion
31 Second inner side nail portion
32 First outer side inclined guide surface
33 First inner side inclined guide surface
34 Second outer side inclined guide surface
35 Second inner side inclined guide surface
36 First supported portion
37, 37a First connecting portion
38, 38a First elastic piece
39 First outer side engaging piece
40 First inner side engaging piece
41 Notch
42 First elastic protrusion
43 Second supported portion
44, 44a Second connecting portion
45, 45a Second elastic piece
46 Second outer side engaging piece
47 Second inner side engaging piece
48 Notch
49 Second elastic protrusion
50 Support base
51 Upper surface
52 Electric power steering device
53 Steering wheel
54 Steering shaft
55 Steering column
56a, 56b Universal joint
57 Intermediate shaft
58 Steering gear unit
59 Electric motor with worm reducer
60 Pinion shaft
61 Tie rods
62 Electric motor
63 Worm reducer
64 Output shaft
65 Housing
66 Worm wheel
67 Worm
68 Wheel accommodating portion
69 Worm accommodating portion
70 Cover
71 Cylindrical surface portion
72 Stepped portion
73 Wheel teeth
74 Core portion
75 Gear portion
76 Worm teeth
77 Fitting cylindrical portion
78 Ball bearing
79 Outer ring
80 Inner ring
81 Flange portion
82 Worm damper
83 Ball bearing
84 Biasing mechanism
85 Through hole
86 Through hole
87 First elastic flat surface
88 First elastic inclined surface
89 Second elastic flat surface
90 Second elastic inclined surface
91 First chamfered portion
92 Second chamfered portion
93 First connecting chamfered portion
94 Second connecting chamfered portion
95 First corner portion
96 Second corner portion

## Claims

1. A torque transmission joint, comprising:
a first rotating member having first projection portions protruding toward one side in an axial direction at a plurality of locations in a circumferential direction on a side surface on the one side in the axial direction,
a second rotating member having second projection portions protruding toward the other side in the axial direction at a plurality of locations in the circumferential direction on a side surface on the other side in the axial direction,
a coupling, having:
first recess portions arranged at a plurality of locations in the circumferential direction, each having a width in the circumferential direction greater than a width in the circumferential direction of each of the first projection portions, and having openings on the other side in the axial direction through which the first projection portions are respectively inserted,
second recess portions arranged at a plurality of locations in the circumferential direction, each having a width in the circumferential direction greater than a width in the circumferential direction of each of the second projection portions, and having openings on the one side in the axial direction through which the second projection portions are respectively inserted,
first support portions protruding toward the other side in the axial direction from a plurality of locations in the circumferential direction at an end portion on the other side in the axial direction, and respectively arranged between a pair of the first projection portions that are adjacent to each other in the circumferential direction of the first projection portions, and
second support portions protruding toward the one side in the axial direction from a plurality of locations in the circumferential direction at an end portion on the one side in the axial direction, and respectively arranged between a pair of the second projection portions that are adjacent to each other in the circumferential direction of the second projection portions,
a first elastic body having:
first supported portions arranged at a plurality of locations in the circumferential direction, respectively having an annular shape, and each externally fitted to each of the first projection portions, and
first connecting portions respectively circumferentially_connecting outer end portions or inner end portions in a radial direction of a pair of the first supported portions that are adjacent to each other in the circumferential direction of the first supported portions,
first elastic pieces, which are portions of the first supported portions respectively located in between the first projection portions and the first support portions that are adjacent to each other in the circumferential direction, respectively held in the circumferential direction between the first projection portions and the first support portions, and
a second elastic body having:
second supported portions arranged at a plurality of locations in the circumferential direction, respectively having an annular shape, and each externally fitted to each of the second projection portions, and
second connecting portions respectively circumferentially connecting outer end portions or inner end portions in the radial direction of a pair of the second supported portions that are adjacent to each other in the circumferential direction of the second supported portions,
second elastic pieces, which are portions of the second supported portions respectively located in between the second projection portions and the second support portions that are adjacent to each other in the circumferential direction, respectively held in the circumferential direction between the second projection portions and the second support portions, and
the coupling having:
first nail portions respectively provided on at least one of an outer side or an inner side in the radial direction of end potions on the other side in the axial direction of the first supported portion and protruding in the radial direction therefrom, and
second nail portions respectively provided on at least one of an outer side or an inner side in the radial direction of end portions on the one side in the axial direction of the second support portions and protruding in the radial direction therefrom,
the first nail portions engaging with the first supported portions from the other side in the axial direction, and
the second nail portions engaging with the second supported portions from the one side in the axial direction.

2. The torque transmission joint according to claim 1, wherein
the second recess portions are arranged at a plurality of locations in the circumferential direction, each of which is arranged between a pair of the first recess portions that are adjacent to each other in the circumferential direction of the first recess portions, and
the coupling includes arm portions each separating the first recess portions and the second recess portions that are adjacent to each other in the circumferential direction, first side plate portions each circumferentially connecting end portions on the one side in the axial direction of a pair of arm portions that exist on both sides in the circumferential direction of the first recess portions of the arm portions, and second side plate portions each circumferentially connecting end portions on the other side in the axial direction of a pair of arm portions that exist on both sides in the circumferential direction of the second recess portions of the arm portions, and
the first support portions respectively protrude toward the other side in the axial direction from side surfaces on the other side in the axial direction of the second side plate portions, and the second support portions respectively protrude toward the one side in the axial direction from side surfaces on the one side in the axial direction of the first side plate portions.

3. The torque transmission joint according to claim 1, wherein
side surfaces on the other side in the axial direction of the first nail portions and side surfaces on the one side in the axial direction of the second nail portions are formed of inclined guide surfaces that are inclined in a direction such that an axial width thereof becomes smaller as going toward a tip end side in the radial direction.

4. The torque transmission joint according to claim 1, wherein
the first nail portions are provided on both the outer side and the inner side in the radial direction of the end portions on the other side in the axial direction of the first support portions,
the second nail portions are provided on both the outer side and the inner side in the radial direction of the end portions on the one side in the axial direction of the second support portions,
each of the plurality of the first connecting portions circumferentially connects outer end portions in the radial direction of the pair of the first supported portions, and a circumferential length of the first nail portions on the outer side in the radial direction is greater than a circumferential length of the first nail portions on the inner side in the radial direction, and
each of the second connecting portions circumferentially connects outer end portions in the radial direction of the pair of the second supported portions, and a circumferential length of the second nail portions on the outer side in the radial direction is greater than a circumferential length of the second nail portions on the inner side in the radial direction.

5. The torque transmission joint according to claim 1, wherein
the first elastic pieces respectively have a first elastic protrusion that protrudes in the circumferential direction on a portion in the radial direction on a side surface in the circumferential direction that faces an outer side surface in the circumferential direction of each of the first projection portions and abuts against the outer side surface in the circumferential direction of each of the first projection portions with an interference, and
the second elastic pieces respectively have a second elastic protrusion that protrudes in the circumferential direction on a portion in the radial direction on a side surface in the circumferential direction that faces an outer side surface in the circumferential direction of each of the second projection portions and abuts against the outer side surfaces in the circumferential direction of each of the second projection portions with an interference.

6. The torque transmission joint according to claim 1, wherein
the first elastic body has first chamfered portions respectively provided at a connecting portion between a side surface on the other side in the axial direction of each of the first elastic pieces and a side surface in the circumferential direction of each of the first elastic pieces that faces an outer side surfaces in the circumferential direction of each of the first projection portions, and
the second elastic body has second chamfered portions respectively provided at a connecting portion between a side surface on the one side in the axial direction of each of the second elastic pieces and a side surfaces in the circumferential direction of each of the second elastic pieces that faces an outer side surface in the circumferential direction of each of the second projection portions.

7. The torque transmission joint according to claim 6, wherein
the first rotating member has a first base portion having a side surface on the one side in the axial direction from which the first projection portions protrude toward the one side in the axial direction, and has first corner portions respectively provided at connecting portions between side surfaces on both sides in the circumferential direction of each of the first projection portions and the side surface on the one side in the axial direction of the first base portion, each of the first corner portions being inclined in a direction away from a center portion of each of the first projection portions in the circumferential direction as going to the other side in the axial direction, and
the second rotating member has a second base portion having a side surface on the other side in the axial direction from which the second projection portions protrude toward the other side in the axial direction, and has second corner portions respectively provided at connecting portions between side surfaces on both sides in the circumferential direction of each of the second projection portions and the side surface on the other side in the axial direction of the second base portion, each of the second corner portions being inclined in a direction away from a center portion of each of the second projection portions in the circumferential direction as going to the one side in the axial direction.

8. The torque transmission joint according to claim 7, wherein
an axial width dimension of each of the first chamfered portions is greater than or equal to an axial width dimension of each of the first corner portions, and a circumferential width dimension of each of the first chamfered portions is greater than or equal to a circumferential width dimension of each of the first corner portions, and
an axial width dimension of each of the second chamfered portions is greater than or equal to an axial width dimension of each of the second corner portions, and a circumferential width dimension of each of the second chamfered portions is greater than or equal to a circumferential width dimension of each of the second corner portions.

9. The torque transmission joint according to claim 1, wherein
an inner side portion in the radial direction of each of side surfaces on the other side in the axial direction of the first support portions is formed of a first flat surface perpendicular to the axial direction of the coupling, and an outer side portion in the radial direction thereof is formed of a first inclined surface that is inclined in a direction toward the one side in the axial direction as going to the outer side in the radial direction, and
an inner side portion in the radial direction of each of side surfaces on the one side in the axial direction of the second support portions is formed of a second flat surface perpendicular to the axial direction of the coupling, and an outer side portion in the radial direction thereof is formed of a second inclined surface that is inclined in a direction toward the other side in the axial direction as going to the outer side in the radial direction.

10. A method for assembling the torque transmission joint according to claim 9, including steps of:
assembling the first elastic body to a portion on the other side in the axial direction of the coupling with the second flat surfaces of the second support portions of the coupling abutting against an upper surface of a support base, and
assembling the second elastic body to a portion on the one side in the axial direction of the coupling with the first flat surfaces of the first support portions of the coupling abutting against the upper surface of the support base.

11. An electric motor with a worm reducer, including
an electric motor having an output shaft,
a worm reducer including
a worm wheel having wheel teeth on an outer circumferential surface thereof, and
a worm having worm teeth on an outer circumferential surface thereof, the worm teeth meshing with the wheel teeth, and
a torque transmission joint connecting the output shaft and the worm so as to be capable of torque transmission, wherein
as the torque transmission joint, the torque transmission joint according to any of claims 1 to 9 is used, and
the first rotating member is either fixed to the output shaft or integrally formed with the output shaft, and
the second rotating member is either fixed to the worm or integrally formed with the worm.
